(19) **Europäisches Patentamt**
**European Patent Office**
**Office européen des brevets**

(11) **EP 4 239 899 A1**

(12) **EUROPEAN PATENT APPLICATION**
published in accordance with Art. 153(4) EPC

(43) Date of publication:
**06.09.2023 Bulletin 2023/36**

(21) Application number: **21886861.0**

(22) Date of filing: **28.10.2021**

(51) International Patent Classification (IPC):
*H04B 7/06* (2006.01)     *H04B 7/0413* (2017.01)
*H04B 17/345* (2015.01)     *H04L 5/00* (2006.01)
*H04J 11/00* (2006.01)     *H04W 48/10* (2009.01)

(52) Cooperative Patent Classification (CPC):
**H04B 7/0413; H04B 7/06; H04B 17/345;**
**H04J 11/00; H04L 5/00; H04W 48/10**

(86) International application number:
**PCT/KR2021/015340**

(87) International publication number:
**WO 2022/092867 (05.05.2022 Gazette 2022/18)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.10.2020  KR 20200143906**

(71) Applicant: **LG Electronics Inc.**
**Yeongdeungpo-gu**
**Seoul 07336 (KR)**

(72) Inventors:
• **GO, Seongwon**
  **Seoul 06772 (KR)**
• **KANG, Jiwon**
  **Seoul 06772 (KR)**
• **KIM, Kyuseok**
  **Seoul 06772 (KR)**

(74) Representative: **Plasseraud IP**
**66, rue de la Chaussée d'Antin**
**75440 Paris Cedex 09 (FR)**

(54) **METHOD AND DEVICE FOR TRANSMITTING OR RECEIVING CHANNEL STATE INFORMATION IN WIRELESS COMMUNICATION SYSTEM**

(57)     A method of a user equipment for reporting channel state information (CSI) in a wireless communication system comprises receiving configuration information related to the CSI, receiving downlink reference signal (DL RS), calculating the CSI based on the DL RS, and reporting the CSI. Based on downlink control information (DCI) triggering the reporting of the CSI, a resource set related to measurement of the DL RS is determined as one specific resource set or a plurality of specific resource sets.

**FIG. 12**

EP 4 239 899 A1

**Description**

## TECHNICAL FIELD

The present disclosure relates to a method of transmitting and receiving channel state information in a wireless communication system and a device thereof.

## BACKGROUND

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

## SUMMARY

A CSI reporting operation of a user equipment (UE) including beam measurement and reporting is mainly used in single-TRP (S-TRP) transmission/reception. There are the following problems in using a CSI reporting operation based on existing NZP CSI-RS resource set or/and CSI-SSB resource set for multiple-TRP (M-TRP) transmission/reception.

Since the UE cannot know that resources within the resource set are DL RS (CSI-RS/SSB) from which TRP, a beam management operation from M-TRP perspective is impossible. Specifically, when the UE reports a best beam to a base station, the UE may report only a best DL RS of one TRP of a plurality of TRPs.

To trigger aperiodic CSI reporting, a CSI trigger state connected to each codepoint of a CSI request field of DCI may be used for M-TRP beam reporting. In this case, the following problem occurs.

According to the existing operation, a trigger state targeting S-TRP beam reporting may be flexibly selected based on a size (0 to 6 bits) of the CSI request field so that the trigger state is mapped to (codepoint of) the CSI request field. However, when the CSI trigger state connected to each codepoint of the CSI request field is used for the M-TRP beam reporting as well as the S-TRP beam reporting, a trigger state targeting the M-TRP beam reporting shall be selected so that it is mapped to codepoint of the CSI request field limited (up to 63) together with the S-TRP trigger state. Accordingly, flexibility is reduced in the triggering of the aperiodic CSI reporting through the CSI request field.

An object of the present disclosure is to provide a CSI reporting method considering M-TRP transmission/reception.

Another object of the present disclosure is to provide a method of increasing flexibility in triggering of aperiodic CSI reporting considering M-TRP transmission/reception.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

In one aspect of the present disclosure, there is provided a method of a user equipment for reporting channel state information (CSI) in a wireless communication system, the method comprising receiving configuration information related to the channel state information (CSI), receiving downlink reference signal (DL RS), calculating the CSI based on the DL RS, and reporting the CSI.

The reporting of the CSI is triggered by downlink control information (DCI), and the reporting of the CSI is related to a specific CSI trigger state among CSI trigger states.

The specific CSI trigger state includes a reporting configuration associated with the CSI, and the reporting configuration associated with the CSI includes information for a resource set related to a measurement of the DL RS.

The information for the resource set related to the measurement of the DL RS represents one or more resource sets. Based on the DCI, the resource set related to the measurement of the DL RS is determined as one specific resource set or a plurality of specific resource sets.

The reporting of the CSI may be triggered by a CSI request field of the DCI.

The DCI may include information for determining the resource set related to the measurement of the DL RS.

The information for determining the resource set related to the measurement of the DL RS may be jointly encoded to a codepoint of a CSI request field of the DCI.

The information for determining the resource set related to the measurement of the DL RS may be indicated based on a specific field of the DCI, and the specific field may be based on a field different from a CSI request field of the DCI.

The DL RS may be based on at least one of channel state information-reference signal (CSI-RS) or a synchronization signal block (SSB).

The one specific resource set may be related to one transmission and reception point (TRP), and each of the plurality of specific resource sets may be related to one of a plurality of TRPs.

The measurement of the DL RS may be performed based on specific spatial relation information.

Based on the resource set related to the measurement of the DL RS being determined as the one specific resource set, the specific spatial relation information is based on a parameter related to QCL information, based on the resource set related to the measurement of the DL RS being determined as the plurality of specific resource sets, the specific spatial relation information is based on a plurality of parameters related to the QCL information.

The plurality of parameters related to the QCL information may be based on IDs of a plurality of TCI states, and each of the IDs of the plurality of TCI states may be related to one of a plurality of transmission and reception points (TRPs).

In another aspect of the present disclosure, there is provided a user equipment reporting channel state information (CSI) in a wireless communication system, the user equipment comprising one or more transceivers, one or more processors, and one or more memories operably connectable to the one or more processors, wherein the one or more memories are configured to store instructions that allow the one or more processors to perform operations based on being executed by the one or more processors.

The operations comprise receiving configuration information related to the channel state information (CSI), receiving downlink reference signal (DL RS), calculating the CSI based on the DL RS, and reporting the CSI.

The reporting of the CSI is triggered by downlink control information (DCI), and the reporting of the CSI is related to a specific CSI trigger state among CSI trigger states.

The specific CSI trigger state includes a reporting configuration associated with the CSI, and the reporting configuration associated with the CSI includes information for a resource set related to a measurement of the DL RS.

The information for the resource set related to the measurement of the DL RS represents one or more resource sets. Based on the DCI, the resource set related to the measurement of the DL RS is determined as one specific resource set or a plurality of specific resource sets.

In another aspect of the present disclosure, there is provided a device comprising one or more memories, and one or more processors functionally connected to the one or more memories.

The one or more memories include instructions that are configured to allow the one or more processors to perform operations based on being executed by the one or more processors.

The operations comprise receiving configuration information related to channel state information (CSI), receiving downlink reference signal (DL RS), calculating the CSI based on the DL RS, and reporting the CSI.

The reporting of the CSI is triggered by downlink control information (DCI), and the reporting of the CSI is related to a specific CSI trigger state among CSI trigger states.

The specific CSI trigger state includes a reporting configuration associated with the CSI, and the reporting configuration associated with the CSI includes information for a resource set related to a measurement of the DL RS.

The information for the resource set related to the measurement of the DL RS represents one or more resource sets. Based on the DCI, the resource set related to the measurement of the DL RS is determined as one specific resource set or a plurality of specific resource sets.

In another aspect of the present disclosure, there are provided one or more non-transitory computer readable mediums storing one or more instructions.

The one or more instructions executable by one or more processors are configured to allow the one or more processors to perform operations.

The operations comprise receiving configuration information related to channel state information (CSI), receiving downlink reference signal (DL RS), calculating the CSI based on the DL RS, and reporting the CSI.

The reporting of the CSI is triggered by downlink control information (DCI), and the reporting of the CSI is related to a specific CSI trigger state among CSI trigger states.

The specific CSI trigger state includes a reporting configuration associated with the CSI, and the reporting configuration associated with the CSI includes information for a resource set related to a measurement of the DL RS.

The information for the resource set related to the measurement of the DL RS represents one or more resource sets. Based on the DCI, the resource set related to the measurement of the DL RS is determined as one specific resource set or a plurality of specific resource sets.

In another aspect of the present disclosure, there is provided a method of a base station for receiving channel state information (CSI) in a wireless communication system, the method comprising transmitting configuration information related to the channel state information (CSI), transmitting downlink reference signal (DL RS), and receiving the CSI.

A reporting of the CSI is triggered by downlink control information (DCI), and the reporting of the CSI is related to a specific CSI trigger state among CSI trigger states.

The specific CSI trigger state includes a reporting configuration associated with the CSI, and the reporting configuration associated with the CSI includes information for a resource set related to a measurement of the DL RS.

The information for the resource set related to the measurement of the DL RS represents one or more resource sets. Based on the DCI, the resource set related to the measurement of the DL RS is determined as one specific resource set or a plurality of specific resource sets.

In another aspect of the present disclosure, there is provided a base station receiving channel state information (CSI) in a wireless communication system, the base station comprising one or more transceivers, one or more processors, and one or more memories operably connectable to the one or more processors, wherein the one or more memories are configured to store instructions that allow the one or more processors to perform operations based on being executed by the one or more processors.

The operations comprise transmitting configuration information related to the channel state information (CSI), transmitting downlink reference signal (DL RS), and receiving the CSI.

A reporting of the CSI is triggered by downlink control information (DCI), and the reporting of the CSI is related to a specific CSI trigger state among CSI trigger states.

The specific CSI trigger state includes a reporting configuration associated with the CSI, and the reporting configuration associated with the CSI includes information for a resource set related to a measurement of the DL RS.

The information for the resource set related to the measurement of the DL RS represents one or more resource sets. Based on the DCI, the resource set related to the measurement of the DL RS is determined as one specific resource set or a plurality of specific resource sets.

According to aspects of the present disclosure, based on the DCI triggering a specific CSI reporting state, the resource set for the measurement of the DL RS can be determined as one specific resource set or a plurality of specific resource sets.

Accordingly, the UE can determine whether the triggered CSI reporting is S-TRP reporting or M-TRP reporting. The CSI reporting operation triggered by the DCI can be used for M-TRP based beam management, and S-TRP based beam reporting and M-TRP based beam reporting can be dynamically switched.

Even if one or more resource sets are configured in a specific CSI trigger state triggered by the CSI request field, S-TRP reporting or M-TRP reporting is performed based on specific resource set(s) determined by the DCI.

Accordingly, the S-TRP reporting or the M-TRP reporting is not performed based on the number of resource sets configured in a CSI trigger state mapped to limited codepoints of the CSI request field, and the S-TRP reporting or the M-TRP reporting can be indicated within a range of the resource set configured in the CSI trigger state. That is, flexibility of a trigger operation of aperiodic CSI reporting through the CSI request field can increase.

Effects which may be obtained by the present disclosure are not limited to the aforementioned effects, and other technical effects not described above may be evidently understood by a person having ordinary skill in the art to which the present disclosure pertains from the following description.

## BRIEF DESCRIPTION OF THE DRAWINGS

The accompanying drawings, which are included to provide a further understanding of the present disclosure and constitute a part of the detailed description, illustrate embodiments of the present disclosure and together with the description serve to explain the principle of the present disclosure.

FIG. 1 is a diagram illustrating an example of an overall system structure of NR to which a method proposed in the present disclosure is applicable.

FIG. 2 illustrates a relationship between an uplink frame and a downlink frame in a wireless communication system to which a method proposed by the present disclosure is applicable.

FIG. 3 illustrates an example of a frame structure in an NR system.

FIG. 4 illustrates an example of a resource grid supported by a wireless communication system to which a method proposed in the present disclosure is applicable.

FIG. 5 illustrates examples of a resource grid for each antenna port and numerology to which a method proposed in the present disclosure is applicable.

FIG. 6 illustrates physical channels and general signal transmission used in a 3GPP system.

FIG. 7 illustrates an example of beamforming using SSB and CSI-RS.

FIG. 8 illustrates an example of a UL BM procedure using an SRS.

FIG. 9 is a flowchart showing an example of a UL BM procedure using the SRS.

FIG. 10 is a flowchart illustrating an example of a CSI related procedure.

FIG. 11 illustrates an aperiodic CSI trigger state subselection MAC CE to which an embodiment of the present disclosure is applicable.

FIG. 12 is a flowchart illustrating a method for a UE to report channel state information in a wireless communication system according to an embodiment of the present disclosure.

FIG. 13 is a flowchart illustrating a method for a base station to receive channel state information in a wireless communication system according to another embodiment of the present disclosure.

FIG. 14 illustrates a communication system 1 applied to the present disclosure.

FIG. 15 illustrates wireless devices applicable to the present disclosure.

FIG. 16 illustrates a signal process circuit for a transmission signal.

FIG. 17 illustrates another example of a wireless device applied to the present disclosure.

FIG. 18 illustrates a hand-held device applied to the present disclosure.

## DETAILED DESCRIPTION

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11(Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

For clarity of description, the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system, "xxx" means a standard document detail number. The LTE/NR may be collectively referred to as the 3GPP system. Matters disclosed in a standard document published before the present disclosure may refer to a background art, terms, abbreviations, etc., used for describing the present disclosure. For example, the following documents may be referenced.

## 3GPP LTE

36.211: Physical channels and modulation
36.212: Multiplexing and channel coding

36.213: Physical layer procedures
36.300: Overall description
36.331: Radio Resource Control (RRC)

**3GPP NR**

38.211: Physical channels and modulation
38.212: Multiplexing and channel coding
38.213: Physical layer procedures for control
38.214: Physical layer procedures for data
38.300: NR and NG-RAN Overall Description
36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. As such, the introduction of next-generation radio access technology considering enhanced mobile broadband communication (eMBB), massive MTC (mMTC), ultra-reliable and low latency communication (URLLC) is discussed, and in the present disclosure, the technology is called NR for convenience. The NR is an expression representing an example of 5G radio access technology (RAT).

Three major requirement areas of 5G include (1) an enhanced mobile broadband (eMBB) area, (2) a massive machine type communication (mMTC) area and (3) an ultra-reliable and low latency communications (URLLC) area.

Some use cases may require multiple areas for optimization, and other use case may be focused on only one key performance indicator (KPI). 5G support such various use cases in a flexible and reliable manner.

eMBB is far above basic mobile Internet access and covers media and entertainment applications in abundant bidirectional tasks, cloud or augmented reality. Data is one of key motive powers of 5G, and dedicated voice services may not be first seen in the 5G era. In 5G, it is expected that voice will be processed as an application program using a data connection simply provided by a communication system. Major causes for an increased traffic volume include an increase in the content size and an increase in the number of applications that require a high data transfer rate. Streaming service (audio and video), dialogue type video and mobile Internet connections will be used more widely as more devices are connected to the Internet. Such many application programs require connectivity always turned on in order to push real-time information and notification to a user. A cloud storage and application suddenly increases in the mobile communication platform, and this may be applied to both business and entertainment. Furthermore, cloud storage is a special use case that tows the growth of an uplink data transfer rate. 5G is also used for remote business of cloud. When a tactile interface is used, further lower end-to-end latency is required to maintain excellent user experiences. Entertainment, for example, cloud game and video streaming are other key elements which increase a need for the mobile broadband ability. Entertainment is essential in the smartphone and tablet anywhere including high mobility environments, such as a train, a vehicle and an airplane. Another use case is augmented reality and information search for entertainment. In this case, augmented reality requires very low latency and an instant amount of data.

Furthermore, one of the most expected 5G use case relates to a function capable of smoothly connecting embedded sensors in all fields, that is, mMTC. Until 2020, it is expected that potential IoT devices will reach 20.4 billions. The industry IoT is one of areas in which 5G performs major roles enabling smart city, asset tracking, smart utility, agriculture and security infra.

URLLC includes a new service which will change the industry through remote control of major infra and a link having ultra reliability/low available latency, such as a self-driving vehicle. A level of reliability and latency is essential for smart grid control, industry automation, robot engineering, drone control and adjustment.

Multiple use cases are described more specifically.

5G may supplement fiber-to-the-home (FTTH) and cable-based broadband (or DOCSIS) as means for providing a stream evaluated from gigabits per second to several hundreds of mega bits per second. Such fast speed is necessary to deliver TV with resolution of 4K or more (6K, 8K or more) in addition to virtual reality and augmented reality. Virtual reality (VR) and augmented reality (AR) applications include immersive sports games. A specific application program may require a special network configuration. For example, in the case of VR game, in order for game companies to minimize latency, a core server may need to be integrated with the edge network server of a network operator.

An automotive is expected to be an important and new motive power in 5G, along with many use cases for the mobile communication of an automotive. For example, entertainment for a passenger requires a high capacity and a high mobility mobile broadband at the same time. The reason for this is that future users continue to expect a high-quality connection regardless of their location and speed. Another use example of the automotive field is an augmented reality dashboard. The augmented reality dashboard overlaps and displays information, identifying an object in the dark and notifying a driver of the distance and movement of the object, over a thing seen by the driver through a front window. In the future, a wireless module enables communication between automotives, information exchange between an automotive and a supported infrastructure, and information exchange between an automotive and other connected devices (e.g., devices accompanied by a pedestrian). A safety system guides alternative courses of a behavior so that a driver can drive more safely, thereby reducing a danger of an accident. A next step will be a remotely controlled or self-driven vehicle. This requires very reliable, very fast communication between different self-driven vehicles and between an automotive and infra. In the future, a self-driven vehicle may perform all driving activities, and a driver will be focused on things other than traffic, which cannot be identified by an automotive itself. Technical requirements of a self-driven vehicle require ultra-low latency and ultra-high speed reliability so that traffic safety is increased up to a level which cannot be achieved by a person.

A smart city and smart home mentioned as a smart society will be embedded as a high-density radio sensor network. The distributed network of intelligent sensors will identify the cost of a city or home and a condition for energy-efficient maintenance. A similar configuration may be performed for each home. All of a temperature sensor, a window and heating controller, a burglar alarm and home appliances are wirelessly connected. Many of such sensors are typically a low data transfer rate, low energy and a low cost. However, for example, real-time HD video may be required for a specific type of device for surveillance.

The consumption and distribution of energy including heat or gas are highly distributed and thus require automated control of a distributed sensor network. A smart grid collects information, and interconnects such sensors using digital information and a communication technology so that the sensors operate based on the information. The information may include the behaviors of a supplier and consumer, and thus the smart grid may improve the distribution of fuel, such as electricity, in an efficient, reliable, economical, production-sustainable and automated manner. The smart grid may be considered to be another sensor network having small latency.

A health part owns many application programs which reap the benefits of mobile communication. A communication system can support remote treatment providing clinical treatment at a distant place. This helps to reduce a barrier for the distance and can improve access to medical services which are not continuously used at remote farming areas. Furthermore, this is used to save life in important treatment and an emergency condition. A radio sensor network based on mobile communication can provide remote monitoring and sensors for parameters, such as the heart rate and blood pressure.

Radio and mobile communication becomes increasingly important in the industry application field. Wiring requires a high installation and maintenance cost. Accordingly, the possibility that a cable will be replaced with reconfigurable radio links is an attractive opportunity in many industrial fields. However, to achieve the possibility requires that a radio connection operates with latency, reliability and capacity similar to those of the cable and that management is simplified. Low latency and a low error probability is a new requirement for a connection to 5G.

Logistics and freight tracking is an important use case for mobile communication, which enables the tracking inventory and packages anywhere using a location-based information system. The logistics and freight tracking use case typically requires a low data speed, but a wide area and reliable location information.

In a New RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. By scaling a reference subcarrier spacing by an integer N, different numerologies can be defined.

### Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network defined by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used at an NG2 reference point between new RAN and NGC.

NG-U: A user plane interface used at an NG3 reference point between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: An end point of NG-U interface.

## Overview of system

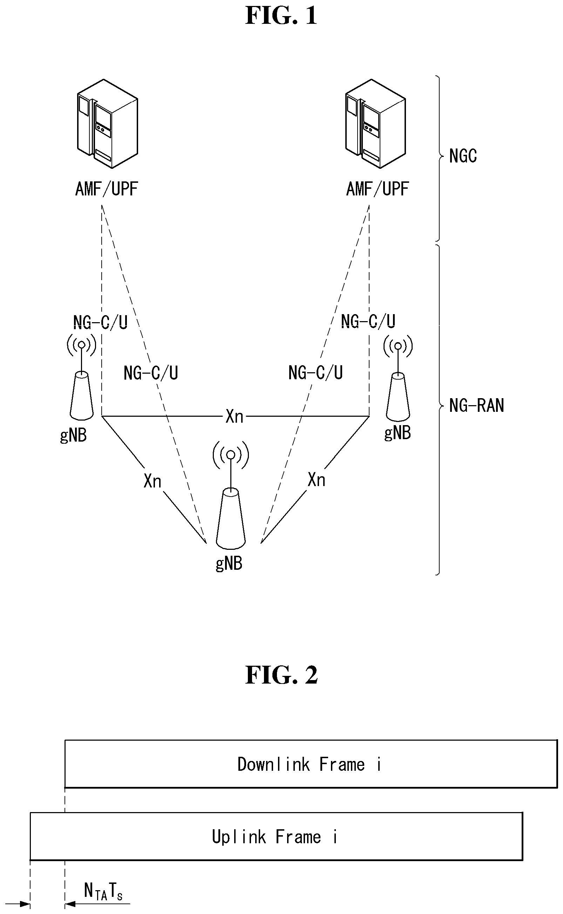

FIG. 1 illustrates an example overall NR system structure to which a method as proposed in the disclosure may apply.

Referring to FIG. 1, an NG-RAN is constituted of gNBs to provide a control plane (RRC) protocol end for user equipment (UE) and NG-RA user plane (new AS sublayer/PDCP/RLC/MAC/PHY).

The gNBs are mutually connected via an Xn interface.

The gNBs are connected to the NGC via the NG interface.

More specifically, the gNB connects to the access and mobility management function (AMF) via the N2 interface and connects to the user plane function (UPF) via the N3 interface.

## New RAT (NR) numerology and frame structure

In the NR system, a number of numerologies may be supported. Here, the numerology may be defined by the subcarrier spacing and cyclic prefix (CP) overhead. At this time, multiple subcarrier spacings may be derived by scaling the basic subcarrier spacing by integer N (or, $\mu$). Further, although it is assumed that a very low subcarrier spacing is not used at a very high carrier frequency, the numerology used may be selected independently from the frequency band.

Further, in the NR system, various frame structures according to multiple numerologies may be supported.

Hereinafter, an orthogonal frequency division multiplexing (OFDM) numerology and frame structure that may be considered in the NR system is described.

The multiple OFDM numerologies supported in the NR system may be defined as shown in Table 1.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

NR supports multiple numerologies (or subcarrier spacings (SCS)) for supporting various 5G services. For example, if SCS is 15 kHz, NR supports a wide area in typical cellular bands. If SCS is 30 kHz/60 kHz, NR supports a dense urban, lower latency and a wider carrier bandwidth. If SCS is 60 kHz or higher, NR supports a bandwidth greater than 24.25 GHz in order to overcome phase noise.

An NR frequency band is defined as a frequency range of two types FR1 and FR2. The FR1 and the FR2 may be configured as in Table 1 below. Furthermore, the FR2 may mean a millimeter wave (mmW).

[Table 2]

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

With regard to the frame structure in the NR system, the size of various fields in the time domain is expressed as a multiple of time unit of $T_s = 1/(\Delta f_{max} \cdot N_f)$, where $\Delta f_{max} = 480 \cdot 10^3$, and $N_f = 4096$. Downlink and uplink transmissions is constituted of a radio frame with a period of $T_f = (\Delta f_{max} N_f/100) \cdot T_s = 10$ ms. Here, the radio frame is constituted of 10 subframes each of which has a period of $T_{sf} = (\Delta f_{max} N_f/1000) \cdot T_s = 1$ ms. In this case, one set of frames for uplink and one set of frames for downlink may exist.

FIG. 2 illustrates a relationship between an uplink frame and downlink frame in a wireless communication system to which a method described in the present disclosure is applicable.

As illustrated in FIG. 2, uplink frame number i for transmission from the user equipment (UE) should begin $T_{TA}$ = $N_{TA}T_s$ earlier than the start of the downlink frame by the UE.

For numerology $\mu$, slots are numbered in ascending order of $n_s^{\mu} \in \left\{0,..., N_{subframe}^{slots, \mu} - 1\right\}$ in the subframe and in ascending order of $n_{s,f}^{\mu} \in \left\{0,..., N_{frame}^{slots,\mu} - 1\right\}$ in the radio frame. One slot includes consecutive OFDM symbols of $N_{symb}^{\mu}$, and $N_{symb}^{\mu}$ is determined according to the used numerology and slot configuration. In the subframe, the start of slot $n_s^{\mu}$ is temporally aligned with the start of $n_s^{\mu} N_{symb}^{\mu}$.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame, \mu}$ of slots per radio frame, and the number $N_{slot}^{subframe, \mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

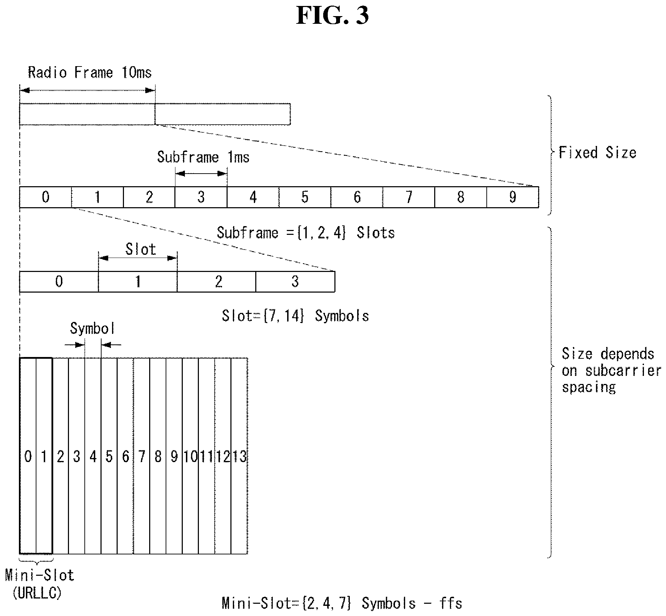

FIG. 3 illustrates an example of a frame structure in a NR system. FIG. 3 is merely for convenience of explanation and does not limit the scope of the present disclosure.

In Table 4, in case of $\mu$ =2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. may be considered.

Hereinafter, the above physical resources that can be considered in the NR system are described in more detail.

First, in regard to an antenna port, the antenna port is defined so that a channel over which a symbol on an antenna port is conveyed can be inferred from a channel over which another symbol on the same antenna port is conveyed. When large-scale properties of a channel over which a symbol on one antenna port is conveyed can be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

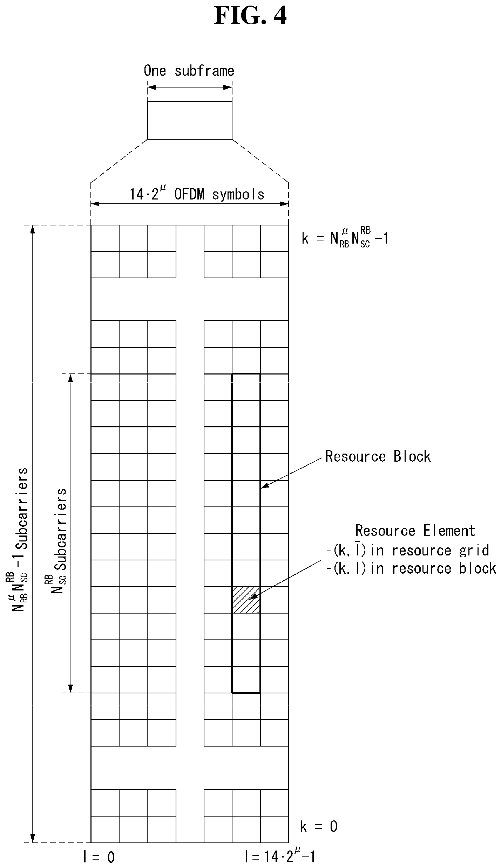

FIG. 4 illustrates an example of a resource grid supported in a wireless communication system to which a method proposed in the present disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14 \cdot 2\mu$ OFDM symbols, but the present disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ $O_{\text{FDM}}$ symbols, where $N_{\text{RB}}^{\mu} \leq N_{\text{RB}}^{\max,\mu}$. $N_{\text{RB}}^{\max,\mu}$ denotes a maximum transmission bandwidth and may change not only between numerologies but also between uplink and downlink..

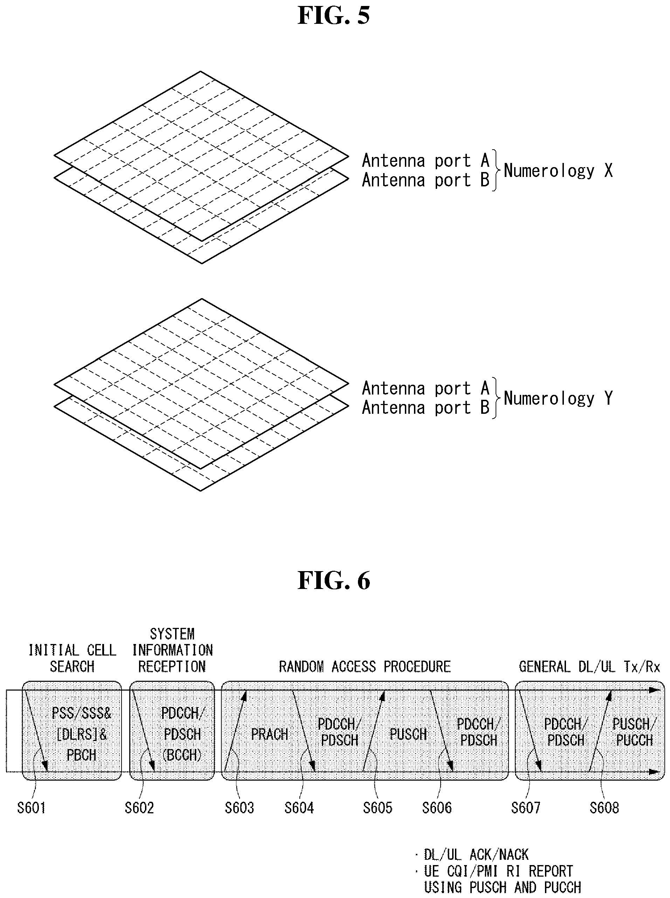

In this case, as illustrated in FIG. 5, one resource grid may be configured per numerology $\mu$ and antenna port p.

FIG. 5 illustrates examples of a resource grid per antenna port and numerology to which a method proposed in the present disclosure is applicable.

Each element of the resource grid for the numerology $\mu$ and the antenna port p is called a resource element and is uniquely identified by an index pair $(k,\bar{l})$, where $k = 0,...., N_{\text{RB}}^{\mu} N_{\text{sc}}^{\text{RB}} - 1$ is an index on a frequency domain, and $\bar{l} = 0,...,2^{\mu} N_{\text{symb}}^{(\mu)} - 1$ refers to a location of a symbol in a subframe. The index pair $(k,\bar{l})$ is used to refer to a resource element in a slot, where $l = 0,...,N_{\text{symb}}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indexes p and $\mu$ may be dropped, and as a result, the complex value may be $a_{k,\bar{l}}^{(p)}$ or $a_{k,\bar{l}}$.

Further, a physical resource block is defined as $N_{\text{sc}}^{\text{RB}} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN).

The common resource blocks are numbered from 0 and upwards in the frequency domain for subcarrier spacing configuration $\mu$.

The center of subcarrier 0 of common resource block 0 for the subcarrier spacing configuration $\mu$ coincides with 'point A'. A common resource block number $n_{\text{CRB}}^{\mu}$ in the frequency domain and resource elements (k, I) for the subcarrier spacing configuration $\mu$ may be given by the following Equation 1.

[Equation 1]

$$n_{\text{CRB}}^{\mu} = \left\lfloor \frac{k}{N_{\text{sc}}^{\text{RB}}} \right\rfloor$$

Here, $k$ may be defined relative to the point A so that $k = 0$ corresponds to a subcarrier centered around the point A. Physical resource blocks are defined within a bandwidth part (BWP) and are numbered from 0 to $N_{\text{BWP},i}^{\text{size}} - 1$, where $i$ is No. of the BWP. A relation between the physical resource block $n_{\text{PRB}}$ in BWP $i$ and the common resource block $n_{\text{CRB}}$ may be given by the following Equation 2.

[Equation 2]

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

**Physical Channel and General Signal Transmission**

FIG. 6 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S601). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S602).

Meanwhile, when there is no radio resource first accessing the eNB or for signal transmission, the UE may perform a Random Access Procedure (RACH) to the eNB (S603 to S606). To this end, the UE may transmit a specific sequence to a preamble through a Physical Random Access Channel (PRACH) (S603 and S605) and receive a response message (Random Access Response (RAR) message) for the preamble through the PDCCH and a corresponding PDSCH. In the case of a contention based RACH, a Contention Resolution Procedure may be additionally performed (S606).

The UE that performs the above procedure may then perform PDCCH/PDSCH reception (S607) and Physical Uplink Shared Channel (PUSCH)/Physical Uplink Control Channel (PUCCH) transmission (S608) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

**Beam Management (BM)**

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.

- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS). Further, each BM procedure may include Tx beam sweeping for determining the Tx beam and Rx beam sweeping for determining the Rx beam.

Downlink Beam Management (DL BM)

The DL BM procedure may include (1) transmission of beamformed DL reference signals (RSs) (e.g., CIS-RS or SS Block (SSB)) of the eNB and (2) beam reporting of the UE.

Here, the beam reporting a preferred DL RS identifier (ID)(s) and L1-Reference Signal Received Power (RSRP).

The DL RS ID may be an SSB Resource Indicator (SSBRI) or a CSI-RS Resource Indicator (CRI).

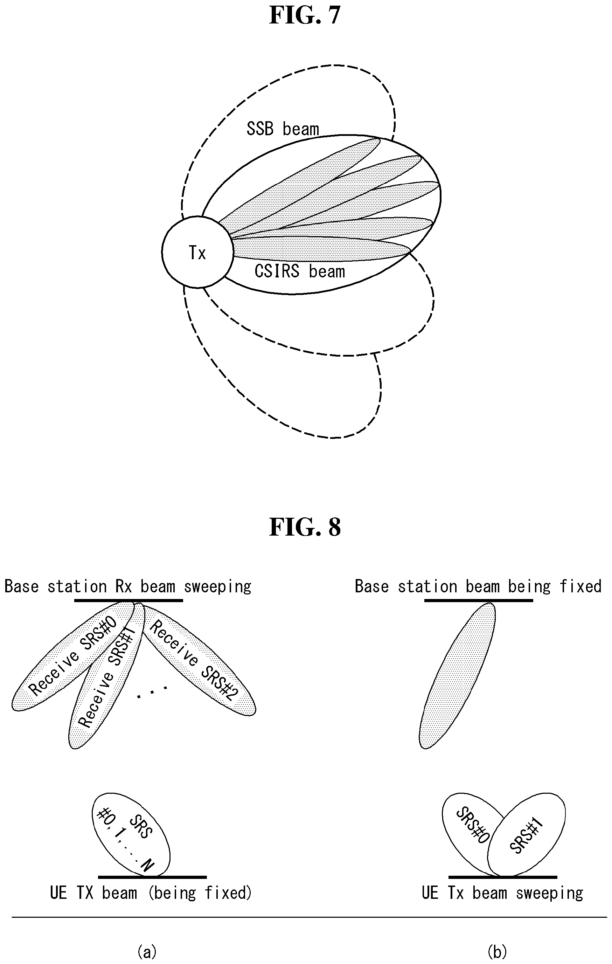

FIG. 7 illustrates an example of beamforming using a SSB and a CSI-RS.

As illustrated in FIG. 7, a SSB beam and a CSI-RS beam may be used for beam measurement. A measurement metric is L1-RSRP per resource/block. The SSB may be used for coarse beam measurement, and the CSI-RS may be used for fine beam measurement. The SSB may be used for both Tx beam sweeping and Rx beam sweeping. The Rx beam sweeping using the SSB may be performed while the UE changes Rx beam for the same SSBRI across multiple SSB bursts. One SS burst includes one or more SSBs, and one SS burst set includes one or more SSB bursts.

DL BM related beam indication

A UE may be RRC-configured with a list of up to M candidate transmission configuration indication (TCI) states at least for the purpose of quasi co-location (QCL) indication, where M may be 64.

Each TCI state may be configured with one RS set. Each ID of DL RS at least for the purpose of spatial QCL (QCL Type D) in an RS set may refer to one of DL RS types such as SSB, P-CSI RS, SP-CSI RS, A-CSI RS, etc.

Initialization/update of the ID of DL RS(s) in the RS set used at least for the purpose of spatial QCL may be performed at least via explicit signaling.

Table 5 represents an example of TCI-State IE.

The TCI-State IE associates one or two DL reference signals (RSs) with corresponding quasi co-location (QCL) types.

[Table 5]

```
-- ASN1START
-- TAG-TCI-STATE-START

TCI-State ::=                SEQUENCE {
    tci-StateId                 TCI-StateId,
    qcl-Type1                QCL-Info,
    qcl-Type2                QCL-Info
    ...
}

QCL-Info ::=                SEQUENCE {
    cell                        ServCellIndex
    bwp-Id                      BWP-Id
    referenceSignal             CHOICE {
        csi-rs                  NZP-CSI-RS-ResourceId,
        ssb                       SSB-Index
    },
    qcl-Type                 ENUMERATED {typeA, typeB, typeC, typeD},
    ...
}

-- TAG-TCI-STATE-STOP
-- ASN1STOP
```

In Table 5, bwp-Id parameter represents a DL BWP where the RS is located, cell parameter represents a carrier where the RS is located, and reference signal parameter represents reference antenna port(s) which is a source of quasi co-location for corresponding target antenna port(s) or a reference signal including the one. The target antenna port(s) may be CSI-RS, PDCCH DMRS, or PDSCH DMRS. As an example, in order to indicate QCL reference RS information on NZP CSI-RS, the corresponding TCI state ID may be indicated to NZP CSI-RS resource configuration information. As another example, in order to indicate QCL reference information on PDCCH DMRS antenna port(s), the TCI state ID may be indicated to each CORESET configuration. As another example, in order to indicate QCL reference information on PDSCH DMRS antenna port(s), the TCI state ID may be indicated via DCI.

Quasi-Co Location (QCL)

The antenna port is defined so that a channel over which a symbol on an antenna port is conveyed can be inferred from a channel over which another symbol on the same antenna port is conveyed. When properties of a channel over which a symbol on one antenna port is conveyed can be inferred from a channel over which a symbol on another antenna port is conveyed, the two antenna ports may be considered as being in a quasi co-located or quasi co-location (QC/QCL) relationship.

The channel properties include one or more of delay spread, Doppler spread, frequency/Doppler shift, average received power, received timing/average delay, and spatial RX parameter. The spatial Rx parameter means a spatial (reception) channel property parameter such as an angle of arrival.

The UE may be configured with a list of up to M TCI-State configurations within the higher layer parameter PDSCH-Config to decode PDSCH according to a detected PDCCH with DCI intended for the corresponding UE and a given serving cell, where M depends on UE capability.

Each TCI-State contains parameters for configuring a quasi co-location relationship between one or two DL reference signals and the DM-RS ports of the PDSCH.

The quasi co-location relationship is configured by the higher layer parameter qcl-Type1 for the first DL RS and qcl-Type2 for the second DL RS (if configured). For the case of two DL RSs, the QCL types are not be the same, regardless of whether the references are to the same DL RS or different DL RSs.

The quasi co-location types corresponding to each DL RS are given by the higher layer parameter qcl-Type of QCL-Info and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna ports may be indicated/configured to be QCLed with a specific TRS in terms of QCL-TypeA and with a specific SSB in terms of QCL-TypeD. The UE receiving the indication/configuration may receive the corresponding NZP CSI-RS using the Doppler or delay value measured in the QCL-TypeA TRS and apply the Rx beam used for QCL-TypeD SSB reception to the reception of the corresponding NZP CSI-RS reception.

The UE may receive an activation command by MAC CE signaling used to map up to eight TCI states to the codepoint of the DCI field 'Transmission Configuration Indication'.

UL BM procedure

A UL BM may be configured such that beam reciprocity (or beam correspondence) between Tx beam and Rx beam is established or not established depending on the UE implementation. If the beam reciprocity between Tx beam and Rx beam is established in both a base station and a UE, a UL beam pair may be adjusted via a DL beam pair. However, if the beam reciprocity between Tx beam and Rx beam is not established in any one of the base station and the UE, a process for determining the UL beam pair is necessary separately from determining the DL beam pair.

Even when both the base station and the UE maintain the beam correspondence, the base station may use a UL BM procedure for determining the DL Tx beam even if the UE does not request a report of a (preferred) beam.

The UM BM may be performed via beamformed UL SRS transmission, and whether to apply UL BM of an SRS resource set is configured by the (higher layer parameter) usage. If the usage is set to 'BeamManagement (BM)', only one SRS resource may be transmitted to each of a plurality of SRS resource sets in a given time instant.

The UE may be configured with one or more sounding reference symbol (SRS) resource sets configured by (higher layer parameter) SRS-ResourceSet (via higher layer signaling, RRC signaling, etc.). For each SRS resource set, the UE may be configured with K≥1 SRS resources (higher later parameter SRS-resource), where K is a natural number, and a maximum value of K is indicated by SRS_capability.

In the same manner as the DL BM, the UL BM procedure may be divided into a UE's Tx beam sweeping and a base station's Rx beam sweeping.

FIG. 8 illustrates an example of an UL BM procedure using an SRS.

More specifically, (a) of FIG. 8 illustrates an Rx beam determination procedure of a base station, and (a) of FIG. 8 illustrates a Tx beam sweeping procedure of a UE.

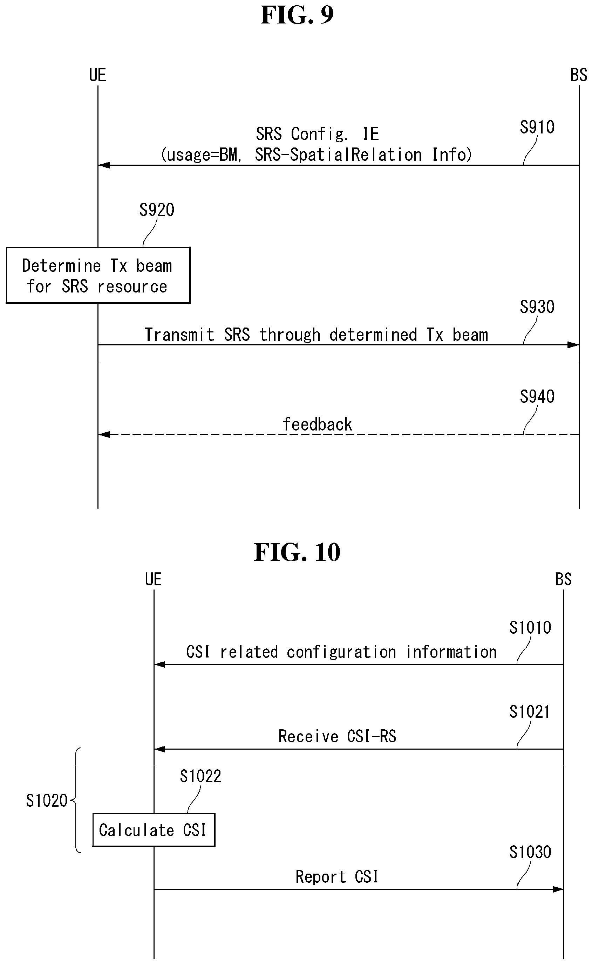

FIG. 9 is a flow chart illustrating an example of an UL BM procedure using an SRS.

- The UE receives, from the base station, RRC signaling (e.g., SRS-Config IE) including (higher layer parameter) usage parameter set to 'beam management' in S910.

Table 6 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

[Table 6]

```
-- ASN1START
-- TAG-MAC-CELL-GROUP-CONFIG-START

SRS-Config ::=                     SEQUENCE {
    srs-ResourceSetToReleaseList          SEQUENCE (SIZE(1..maxNrofSRS-
ResourceSets)) OF SRS-ResourceSetId       OPTIONAL,     -- Need N
    srs-ResourceSetToAddModList        SEQUENCE (SIZE(1..maxNrofSRS-
ResourceSets)) OF SRS-ResourceSet          OPTIONAL,     -- Need N

    srs-ResourceToReleaseList             SEQUENCE (SIZE(1..maxNrofSRS-
Resources)) OF SRS-ResourceId             OPTIONAL, -- Need N
    srs-ResourceToAddModList           SEQUENCE (SIZE(1..maxNrofSRS-
Resources)) OF SRS-Resource               OPTIONAL,     -- Need N

    tpc-Accumulation                   ENUMERATED {disabled}
    ...
}
SRS-ResourceSet ::=                SEQUENCE {
    srs-ResourceSetId                  SRS-ResourceSetId,
    srs-ResourceIdList                 SEQUENCE (SIZE(1..maxNrofSRS-
ResourcesPerSet)) OF SRS-ResourceId   OPTIONAL, -- Cond Setup

    resourceType                       CHOICE {
        aperiodic                      SEQUENCE {
            aperiodicSRS-ResourceTrigger        INTEGER (1..maxNrofSRS-
TriggerStates-1),
            csi-RS                             NZP-CSI-RS-ResourceId
            slotOffset                         INTEGER (1..32)
            ...
        },
        semi-persistent                SEQUENCE {
            associatedCSI-RS                   NZP-CSI-RS-ResourceId
            ...
        },
        periodic                       SEQUENCE {
            associatedCSI-RS                   NZP-CSI-RS-ResourceId
            ...
        }
    },
    usage                              ENUMERATED {beamManagement,
codebook, nonCodebook, antennaSwitching},
    alpha                              Alpha
    p0                                 INTEGER (-202..24)
    pathlossReferenceRS                CHOICE {
        ssb-Index                      SSB-Index,
        csi-RS-Index                   NZP-CSI-RS-ResourceId

SRS-SpatialRelationInfo ::=        SEQUENCE {
    servingCellId                      ServCellIndex
    referenceSignal                    CHOICE {
        ssb-Index                      SSB-Index,
        csi-RS-Index                   NZP-CSI-RS-ResourceId,
        srs                            SEQUENCE {
            resourceId                         SRS-ResourceId,
            uplinkBWP                          BWP-Id
        }
    }
}

SRS-ResourceId ::=                 INTEGER (0..maxNrofSRS-Resources-1)
```

In Table 6, usage refers to a higher layer parameter to indicate whether the SRS resource set is used for beam management or is used for codebook based or non-codebook based transmission. The usage parameter corresponds to L1 parameter 'SRS-SetUse'. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo'. The usage is configured per SRS resource set.

- The UE determines the Tx beam for the SRS resource to be transmitted based on SRS-SpatialRelation Info contained in the SRS-Config IE in S920. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.
- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS via the determined Tx beam in S930.

More specifically, for P-SRS with 'SRS-ResourceConfigType' set to 'periodic':

i) if SRS-SpatialRelationInfo is set to 'SSB/PBCH,' the UE transmits the corresponding SRS resource with the same spatial domain transmission filter (or generated from the corresponding filter) as the spatial domain Rx filter used for the reception of the SSB/PBCH; or

ii) if SRS-SpatialRelationInfo is set to 'CSI-RS,' the UE transmits the SRS resource with the same spatial domain transmission filter used for the reception of the periodic CSI-RS or SP CSI-RS; or

iii) if SRS-SpatialRelationInfo is set to 'SRS,' the UE transmits the SRS resource with the same spatial domain transmission filter used for the transmission of the periodic SRS.

Even if 'SRS-ResourceConfigType' is set to 'SP-SRS' or 'AP-SRS,' the beam determination and transmission operations may be applied similar to the above.

- Additionally, the UE may receive or may not receive feedback for the SRS from the base station, as in the following three cases in S940.

i) If Spatial_Relation_Info is configured for all the SRS resources within the SRS resource set, the UE transmits the SRS with the beam indicated by the base station. For example, if the Spatial_Relation_Info indicates all the same SSB, CRI, or SRI, the UE repeatedly transmits the SRS with the same beam. This case corresponds to (a) of FIG. 8 as the usage for the base station to select the Rx beam.

ii) The Spatial_Relation_Info may not be configured for all the SRS resources within the SRS resource set. In this case, the UE may perform transmission while freely changing SRS beams. That is, this case corresponds to (b) of FIG. 8 as the usage for the UE to sweep the Tx beam.

iii) The Spatial_Relation_Info may be configured for only some SRS resources within the SRS resource set. In this case, the UE may transmit the configured SRS resources with the indicated beam, and transmit the SRS resources, for which Spatial_Relation_Info is not configured, by randomly applying the Tx beam.

Hereinafter, a CSI related procedure will be described.

FIG. 10 is a flowchart illustrating an example of a CSI related procedure.

Referring to FIG. 10, in order to perform one of usages of the CSI-RS, a terminal (e.g., user equipment (UE)) receives, from a base station (e.g., general Node B or gNB), configuration information related to the CSI through radio resource control (RRC) signaling (S1010).

The configuration information related to the CSI may include at least one of CSI-interference management (IM) resource related information, CSI measurement configuration related information, CSI resource configuration related information, CSI-RS resource related information, or CSI report configuration related information.

The CSI-IM resource related information may include CSI-IM resource information, CSI-IM resource set information, and the like. The CSI-IM resource set is identified by a CSI-IM resource set identifier (ID) and one resource set includes at least one CSI-IM resource. Each CSI-IM resource is identified by a CSI-IM resource ID.

The CSI resource configuration related information may be expressed as CSI-ResourceConfig IE. The CSI resource configuration related information defines a group including at least one of a non zero power (NZP) CSI-RS resource set, a CSI-IM resource set, or a CSI-SSB resource set. In other words, the CSI resource configuration related information may include a CSI-RS resource set list and the CSI-RS resource set list may include at least one of a NZP CSI-RS resource set list, a CSI-IM resource set list, or a CSI-SSB resource set list. The CSI-RS resource set is identified by a CSI-RS resource set ID and one resource set includes at least one CSI-RS resource. Each CSI-RS resource is identified by a CSI-RS resource ID.

Table 7 shows an example of NZP CSI-RS resource set IE. Referring to Table 7, parameters (e.g., a BM related 'repetition' parameter and a tracking related 'trs-Info' parameter) representing the usage may be configured for each NZP CSI-RS resource set.

[Table 7]

```
-- ASN1START
-- TAG-NZP-CSI-RS-RESOURCESET-START
NZP-CSI-RS-ResourceSet ::=            SEQUENCE {
    nzp-CSI-ResourceSetId             NZP-CSI-RS-ResourceSetId,
    nzp-CSI-RS-Resources              SEQUENCE (SIZE (1..maxNrofNZP-CSI-RS-
ResourcesPerSet)) OF NZP-CSI-RS-ResourceId,
    repetition                        ENUMERATED { on, off }
    aperiodicTriggeringOffset         INTEGER(0..4)
    trs-Info                          ENUMERATED {true}
    ...
}

-- TAG-NZP-CSI-RS-RESOURCESET-STOP
-- ASN1STOP
```

In addition, the repetition parameter corresponding to the higher layer parameter corresponds to 'CSI-RS-ResourceRep' of L1 parameter.

The CSI report configuration related information includes a reportConfigType parameter representing a time domain behavior and a reportQuantity parameter representing a CSI related quantity for reporting. The time domain behavior may be periodic, aperiodic, or semi-persistent.

The CSI report configuration related information may be expressed as CSI-ReportConfig IE and Table 8 below shows an example of CSI-ReportConfig IE.

[Table 8]

```
-- ASN1START
-- TAG-CSI-RESOURCECONFIG-START

CSI-ReportConfig ::=                  SEQUENCE {
    reportConfigId                    CSI-ReportConfigId,
    carrier                           ServCellIndex              OPTIONAL, -
- Need S
    resourcesForChannelMeasurement    CSI-ResourceConfigId,
    csi-IM-ResourcesForInterference   CSI-ResourceConfigId       OPTIONAL, -
- Need R
    nzp-CSI-RS-ResourcesForInterference   CSI-ResourceConfigId   OPTIONAL, -
- Need R
    reportConfigType                  CHOICE {
        periodic                              SEQUENCE {
            reportSlotConfig                      CSI-
ReportPeriodicityAndOffset,
            pucch-CSI-ResourceList                SEQUENCE (SIZE
(1..maxNrofBWPs)) OF PUCCH-CSI-Resource
        },
        semiPersistentOnPUCCH                 SEQUENCE {
            reportSlotConfig                      CSI-
ReportPeriodicityAndOffset,
            pucch-CSI-ResourceList                SEQUENCE (SIZE
(1..maxNrofBWPs)) OF PUCCH-CSI-Resource
        },
        semiPersistentOnPUSCH                 SEQUENCE {
            reportSlotConfig                      ENUMERATED {s15, s110, s120,
s140, s180, s1160, s1320},
            reportSlotOffsetList              SEQUENCE (SIZE (1.. maxNrofUL-
Allocations)) OF INTEGER(0..32),
            p0alpha                           P0-PUSCH-AlphaSetId
        },
        aperiodic                             SEQUENCE {
            reportSlotOffsetList              SEQUENCE (SIZE (1..maxNrofUL-
Allocations)) OF INTEGER(0..32)
        }
    },
    reportQuantity                    CHOICE {
        none                          NULL,
        cri-RI-PMI-CQI                NULL,
        cri-RI-i1                     NULL,
        cri-RI-i1-CQI                 SEQUENCE {
            pdsch-BundleSizeForCSI            ENUMERATED {n2, n4}
    OPTIONAL
        },
        cri-RI-CQI                    NULL,
        cri-RSRP                      NULL,
        ssb-Index-RSRP                NULL,
        cri-RI-LI-PMI-CQI             NULL
    },
```

- The UE measures CSI based on configuration information related to the CSI (S 1020). The CSI measurement may include (1) a CSI-RS reception process of the UE (S1021) and (2) a process of computing the CSI through the received CSI-RS (S1022), and a detailed description thereof will be made below.

For the CSI-RS, resource element (RE) mapping is configured time and frequency domains by higher layer parameter CSI-RS-ResourceMapping.

Table 9 shows an example of CSI-RS-ResourceMapping IE.

[Table 9]

```
    -- ASN1START
    -- TAG-CSI-RS-RESOURCEMAPPING-START

    CSI-RS-ResourceMapping ::=          SEQUENCE {
        frequencyDomainAllocation           CHOICE {
            row1                                BIT STRING (SIZE (4)),
            row2                                BIT STRING (SIZE (12)),
            row4                                BIT STRING (SIZE (3)),
            other                               BIT STRING (SIZE (6))
        },
        nrofPorts                           ENUMERATED {p1,p2,p4,p8,p12,p16,p24,p32},
        firstOFDMSymbolInTimeDomain         INTEGER (0..13),
        firstOFDMSymbolInTimeDomain2        INTEGER (2..12)
        cdm-Type                            ENUMERATED {noCDM, fd-CDM2, cdm4-FD2-TD2, cdm8-
FD2-TD4},
        density                             CHOICE {
            dot5                                ENUMERATED {evenPRBs, oddPRBs},
            one                                 NULL,
            three                               NULL,
            spare                               NULL
        },
        freqBand                            CSI-FrequencyOccupation,
        ...
    }
```

In Table 9, a density (D) represents a density of the CSI-RS resource measured in RE/port/physical resource block (PRB) and nrofPorts represents the number of antenna ports.

-    The UE reports the measured CSI to the BS (S1030).

Here, when a quantity of CSI-ReportConfig of Table 8 is configured to 'none (or No report)', the UE may skip the report.

However, even when the quantity is configured to 'none (or No report)', the UE may report the measured CSI to the BS.

The case where the quantity is configured to 'none (or No report)' is a case of triggering aperiodic TRS or a case where repetition is configured.

Here, only in a case where the repetition is configured to 'ON', the report of the UE may be omitted.

The contents described above may be applied in combination with methods proposed in the present disclosure to be described below or may be supplemented to clarify technical features of the methods proposed in the present disclosure. Methods to be described below are just distinguished for convenience and it is needless to say that some components of any one method may be substituted with some components of another method or may be applied in combination with each other.

In NR Rel-15/Rel-16, CSI measurement and/or CSI reporting procedure of a UE is defined for a BS-UE CSI reporting operation. In order for the UE to measure channel state information (CSI)/L1-reference signal received Power (L1-RSRP)/L1-Signal to Interference plus Noise Ratio (L1-SINR) of DL RS (e.g., CSI-RS/SSB), specific CSI-RS resource set(s)) or/and CSI-SSB resource set(s) may be configured (by the base station) to the UE.

The CSI-RS resource set(s) or/and the CSI-SSB resource set(s) may be configured/linked within specific CSI resource setting (e.g., RRC IE CSI-ResourceConfig). And, the CSI resource setting may be configured/linked/associated to specific CSI reporting setting (e.g., RRC IE CSI-ReportConfig), and information (e.g., CSI-related quantities, L1-RSRP-related quantities or L1-SINR-related quantities) based on reportQuantity of the CSI reporting setting may be reported by the UE.

The CSI reporting operation of the UE including the above-described beam measurement and reporting is mainly used in single-TRP (S-TRP) transmission/reception. Accordingly, there is a need to support a CSI reporting operation for multiple-TRP (M-TRP) transmission/reception. The following describes detailed examples.

A CSI resource set (e.g., NZP CSI-RS resource set) or/and a CSI-SSB resource set including CSI resources and SSB resources for the existing channel measurement have the following problem.

Since the UE cannot know that the resources within the corresponding set are DL RS (CSI-RS/SSB) from which TRP, there is a problem in that a beam management (BM) operation from M-TRP perspective is impossible. This is described in detail below.

The UE may perform the beam reporting based on a group-based beam reporting/non-group-based beam reporting operation. When the UE reports a best beam to a base station, the UE may report only a best DL RS of one TRP. Hence, there may occur the problem in that the BM operation from M-TRP perspective is impossible.

The present disclosure describes a method for SSB/CSI-RS resource setting or/and CSI reporting setting of a base station (considering M-TRP transmission/reception) and a subsequent CSI reporting operation of a UE.

Triggering of aperiodic CSI reporting/aperiodic CSI-RS

The following describes aperiodic CSI reporting/aperiodic CSI-RS when the triggering PDCCH and the CSI-RS have the same numerology.

For CSI-RS resource sets related to resource settings configured with the higher layer parameter resourceType set to 'aperiodic', 'periodic', or 'semi-persistent', trigger states for reporting setting(s) (configured with the higher layer parameter reportConfigType set to 'aperiodic') and/or resource setting for channel and/or interference measurement on one or more component carriers are configured using the higher layer parameter CSI-AperiodicTriggerStateList. For aperiodic CSI report triggering, a single set of CSI triggering states are configured via higher layer, wherein the CSI triggering states can be associated with any candidate DL BWP. A UE is not expected to receive more than one DCI with non-zero CSI request per slot. A UE is not expected to be configured with different TCI-StateId's for the same aperiodic CSI-RS resource ID configured in multiple aperiodic CSI-RS resource sets with the same triggering offset in the same aperiodic trigger state. A UE is not expected to receive more than one aperiodic CSI report request for transmission in a given slot.

If a UE does not indicate its capability of CSItriggerStateContainingNonactiveBWP, the UE is not expected to be triggered with a CSI report for a non-active DL BWP.

Otherwise (if the UE indicates its capability of CSItriggerStateContainingNonactiveBWP), the UE may operate as follows. When a UE is triggered with a CSI report for a DL BWP that is non-active when expecting to receive the most recent occasion, no later than the CSI reference resource, of the associated NZP CSI-RS, the UE is not expected to report the CSI for the non-active DL BWP, and the CSI report associated with that BWP is omitted.

When a UE is triggered with aperiodic NZP CSI-RS in a DL BWP that is non-active when expecting to receive the NZP CSI-RS, the UE is not expected to measure the aperiodic CSI-RS. In the carrier of the serving cell expecting to receive that associated NZP CSI-RS, if the active DL BWP when receiving the NZP CSI-RS is different from the active DL BWP when receiving the triggering DCI, the following operation may be performed.

- The last symbol of the PDCCH span of the DCI carrying the BWP switching shall be no later than the last symbol of the PDCCH span of the DCI carrying the CSI trigger, irrespective of whether they are in the same carrier of a serving cell or not and irrespective of whether they are in the same SCS or not.
- The UE is not expected to have any other BWP switching in that carrier after the last symbol of the PDCCH span covering the DCI carrying the CSI trigger and before the first symbol of the triggered NZP CSI-RS or CSI-IM.

A trigger state is initiated using the CSI request field in DCI.

- When all the bits of CSI request field in DCI are set to zero, no CSI is requested.
- When the number of configured CSI triggering states in CSI-AperiodicTriggerStateList is greater than $2^{N_{TS}} - 1$, where $N_{TS}$ is the number of bits in the DCI CSI request field, the UE receives a subselection indication used to map up to $2^{N_{TS}} - 1$ trigger states to the codepoints of the CSI request field in DCI (TS 38.321, s6.1.3.13). $N_{TS}$ is configured by the higher layer parameter reportTriggerSize, where $N_{TS} \in \{0,1,2,3,4,5,6\}$. When the UE transmits the PUCCH along with HARQ/ACK information in the slot n corresponding to the PDSCH carrying the subselection indication, the corresponding action in [10, TS 38.321] and UE assumption on the mapping of the selected CSI trigger state(s) to the codepoint(s) of DCI CSI request field shall be applied starting from a first slot after slot $n + 3N_{slot}^{subframe,\mu}$, where is SCS configuration for the PUCCH.
- When the number of CSI triggering state(s) in CSI-AperiodicTriggerStateList is less than or equal to $2^{N_{TS}} - 1$, the CSI request field in DCI directly indicates the triggering state.
- For each aperiodic CSI-RS resource in a CSI-RS resource set associated with each CSI triggering state, the UE is indicated the quasi co-location configuration of quasi co-location RS source(s) and quasi co-location type(s) via higher layer signaling of QCL-info. The QCL-info contains a list of references to TCI-State's for the aperiodic CSI-RS resources associated with the CSI triggering state. If a State referred to in the list is configured with a reference to an RS associated with 'QCL-TypeD', that RS may be i) an SS/PBCH block located in the same or different CC/DL BWP or ii) a CSI-RS resource configured as periodic or semi-persistent located in the same or different CC/DL BWP.
- If the scheduling offset between the last symbol of the PDCCH carrying the triggering DCI and the first symbol of the aperiodic CSI-RS resources in a NZP-CSI-RS-ResourceSet configured without higher layer parameter trs-Info is smaller than the UE reported threshold beamSwitchingTiming when the reported value is one of the values of {14, 28, 48} and enableBeamSwitchTiming-r16 is not provided, or if the scheduling offset is smaller than 48 when the reported value of beamSwitchingTiming is one of the values of {224, 336},

- if there is any other DL signal with an indicated TCI state in the same symbols as the CSI-RS, the UE applies the QCL assumption of the other DL signal also when receiving the aperiodic CSI-RS. The other DL signal refers to i) PDSCH scheduled with offset larger than or equal to the threshold timeDurationForQCL, ii) aperiodic CSI-RS scheduled with offset larger than or equal to the UE reported threshold beamSwitchTiming when the reported value is one of the values {14, 28, 48} and enableBeamSwitchTiming-r16 is not provided, iii) aperiodic CSI-RS scheduled with offset larger than or equal to 48 when the reported value of beamSwitchTiming is one of the values {224, 336} and enableBeamSwitchTiming-r16 is not provided, iv) periodic CSI-RS, and v) semi-persistent CSI-RS;

- else if at least one CORESET is configured for the BWP in which the aperiodic CSI-RS is received, when receiving the aperiodic CSI-RS, the UE applies the QCL assumption used for the CORESET associated with a monitored search space with the lowest controlResourceSetId in the latest slot in which one or more CORESETs within the active BWP of the serving cell are monitored.

- Else if the UE is configured with enableDefaultBeamForCCS and when receiving the aperiodic CSI-RS, the UE applies the QCL assumption of the lowest-ID activated TCI state applicable to the PDSCH within the active BWP of the cell in which the CSI-RS is to be received.

- If the scheduling offset between the last symbol of the PDCCH carrying the triggering DCI and the first symbol of the aperiodic CSI-RS resources in a NZP-CSI-RS-ResourceSet configured without higher layer parameter trs-Info is greater than or equal to the UE reported threshold beamSwitchingTiming when the reported value is one of the values of {14, 28, 48} and enableBeamSwitchTiming-r16 is not provided, or if the scheduling offset is greater than or equal to 48 when the reported value of beamSwitchingTiming is one of the values of {224, 336} and enableBeamSwitchTiming-r16 is not provided, the UE is expected to apply the QCL assumptions in the indicated TCI states for the aperiodic CSI-RS resources in the CSI triggering state indicated by the CSI trigger field in DCI.

- A non-zero codepoint of the CSI request field in the DCI is mapped to a CSI triggering state according to the order of the associated positions of the up to $2^{N_{TS}} - 1$ trigger states in CSI-AperiodicTriggerStateList. Codepoint '1' in the AperiodicTriggerStateList is mapped to the triggering state in the first position.

For a UE configured with the higher layer parameter CSI-AperiodicTriggerStateList, if a resource setting linked to a CSI-ReportConfig has multiple aperiodic resource sets, only one of the aperiodic CSI-RS resource sets from the resource setting is associated with the trigger state, and the UE is configured via higher layer to operate as follows. The UE is configured per trigger state per resource setting to select the one CSI-IM/NZP CSI-RS resource set from the resource setting.

When aperiodic CSI-RS is used with aperiodic reporting, the CSI-RS offset is configured per resource set by the higher layer parameter aperiodicTriggeringOffset or aperiodicTriggeringOffset-r16. The CSI-RS triggering offset has the values of {0, 1, 2, 3, 4, 5, 6, ..., 15, 16, 24} slots. If the UE is not configured with minimumSchedulingOffsetK0 for any DL BWP and minimumSchedulingOffsetK2 for any UL BWP and if all the associated trigger states do not have the higher layer parameter QCL-Type set to 'QCL-TypeD' in the corresponding TCI states, the CSI-RS triggering offset is fixed to zero. The aperiodic triggering offset of the CSI-IM follows offset of the associated NZP CSI-RS for channel measurement.

The UE does not expect that aperiodic CSI-RS is transmitted before the OFDM symbol(s) carrying its triggering DCI. When the minimum scheduling offset restriction is applied, the UE is not expected to be triggered by CSI triggering state indicated by the CSI request field in DCI in which CSI-RS triggering offset is smaller than the currently applicable minimum scheduling offset restriction Kamin.

If interference measurement is performed on aperiodic NZP CSI-RS, a UE is not expected to be configured with a different aperiodic triggering offset of the NZP CSI-RS for interference measurement from the associated NZP CSI-RS for channel measurement.

If the UE is configured with a single carrier for uplink, the UE is not expected to transmit more than one aperiodic CSI report triggered by different DCIs on overlapping OFDM symbols.

Table 10 below shows the higher layer parameter CSI-AperiodicTriggerStateList.

【Table 10】

```
–              CSI-AperiodicTriggerStateList

The CSI-AperiodicTriggerStateList IE is used to configure the UE with a list of aperiodic trigger states. Each codepoint of the DCI field "CSI request" is associated with one
trigger state (see TS 38.321 [3], clause 6.1.3.13). Upon reception of the value associated with a trigger state, the UE will perform measurement of CSI-RS, CSI-IM and/or SSB
(reference signals) and aperiodic reporting on L1 according to all entries in the associatedReportConfigInfoList for that trigger state.

                              CSI-AperiodicTriggerStateList information element

-- ASN1START
-- TAG-CSI-APERIODICTRIGGERSTATELIST-START

CSI-AperiodicTriggerStateList ::=  SEQUENCE (SIZE (1..maxNrOfCSI-AperiodicTriggers)) OF CSI-AperiodicTriggerState

CSI-AperiodicTriggerState ::=      SEQUENCE {
    associatedReportConfigInfoList     SEQUENCE (SIZE(1..maxNrofReportConfigPerAperiodicTrigger)) OF CSI-AssociatedReportConfigInfo,
    ...
}

CSI-AssociatedReportConfigInfo ::= SEQUENCE {
    reportConfigId                     CSI-ReportConfigId,
    resourcesForChannel                CHOICE {
        nzp-CSI-RS                         SEQUENCE {
            resourceSet                        INTEGER (1..maxNrofNZP-CSI-RS-ResourceSetsPerConfig),
            qcl-info                           SEQUENCE (SIZE(1..maxNrofAP-CSI-RS-ResourcesPerSet)) OF TCI-StateId
                                                               OPTIONAL  -- Cond Aperiodic
        },
        csi-SSB-ResourceSet                INTEGER (1..maxNrofCSI-SSB-ResourceSetsPerConfig)
    },
    csi-IM-ResourcesForInterference    INTEGER(1..maxNrofCSI-IM-ResourceSetsPerConfig)
                                                               OPTIONAL, -- Cond CSI-IM-ForInterference
    nzp-CSI-RS-ResourcesForInterference INTEGER (1..maxNrofNZP-CSI-RS-ResourceSetsPerConfig)
                                                               OPTIONAL, -- Cond NZP-CSI-RS-ForInterference
    ...
}

-- TAG-CSI-APERIODICTRIGGERSTATELIST-STOP
-- ASN1STOP
```

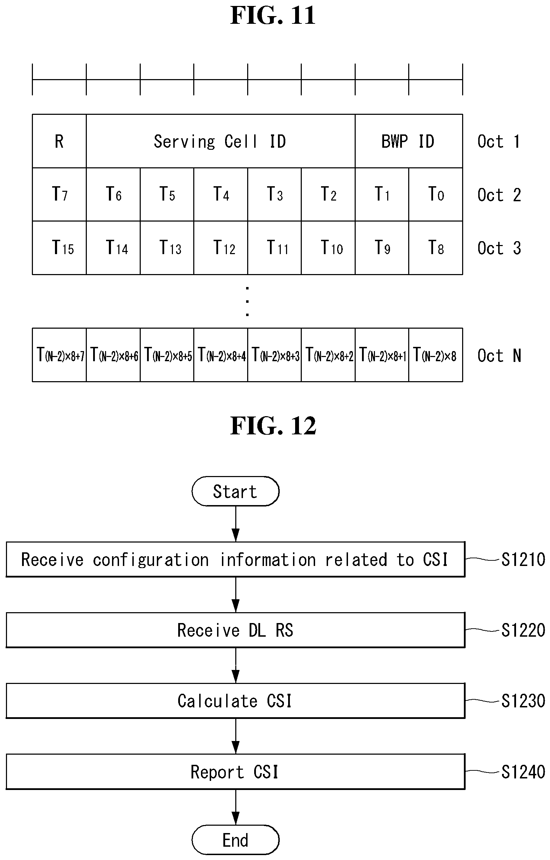

An aperiodic CSI trigger state subselection MAC CE is described below with reference to FIG. 11.

FIG. 11 illustrates an aperiodic CSI trigger state subselection MAC CE to which an embodiment of the present disclosure is applicable.

The aperiodic CSI trigger state subselection MAC CE is identified by MAC subheader having a designated LCID. Referring to FIG. 11, the aperiodic CSI trigger state subselection MAC CE has a variable size including the following fields.

- Serving Cell ID: This field indicates the ID of the Serving Cell for which the MAC CE applies. The length of the field is 5 bits.
- BWP ID: This field indicates a DL BWP for which the MAC CE applies as the codepoint of the DCI bandwidth part indicator field. The length of the BWP ID field is 2 bits.
- Ti: This field indicates the selection status of the aperiodic trigger states configured within aperiodicTriggerStateList. $T_0$ refers to the first trigger state within the list, and $T_1$ refers to the second trigger state. If the list does not contain entry with index i, MAC entity shall ignore the $T_i$ field. The $T_i$ field is set to 1 to indicate that the aperiodic trigger state i shall be mapped to the codepoint of the DCI CSI request field. The codepoint to which the aperiodic trigger state is mapped is determined by its ordinal position among all the aperiodic trigger states with $T_i$ field set to 1. That is, the first aperiodic trigger state with $T_i$ field set to 1 shall be mapped to the codepoint value 1, the second aperiodic trigger state with $T_i$ field set to 1 shall be mapped to the codepoint value 2, and the rest are mapped in the same way. The maximum number of mapped aperiodic trigger states is 63.
- R: Reserved bit, set to 0.

In the present disclosure, '/' may be interpreted as 'and', 'or', or 'and/or' depending on the context.

[Proposal 1]

A plurality of CSI resource sets for DL CSI measurement may be configured/activated/triggered within single CSI resource setting (e.g., RRC IE CSI-ResourceConfig) configured/linked/associated to single CSI reporting setting (e.g., RRC IE CSI-ReportConfig). For example, the number of CSI resource sets may be based on the number of TRPs.

In the present disclosure, the CSI resource set may be based on at least one of NZP-CSI-RS-ResourceSet, CSI-SSB-ResourceSet, or CSI-IM-ResourceSet. For example, the plurality of CSI resource sets may refer to a plurality of NZP-CSI-RS-ResourceSets. For example, the plurality of CSI resource sets may refer to a plurality of NZP-CSI-RS-ResourceSets and/or a plurality of CSI-SSB-ResourceSets.

Specifically, a plurality of nzp-CSI-RS-ResourceSets or/and a plurality of CSI-SSB-ResourceSets may be configured within CSI resource setting for channel measurement (or interference measurement (NZP-CSI-RS for IM)). Multiple resource sets (as many as the number of TRPs) among the plurality of resource sets may be activated or triggered for the single CSI reporting setting. The plurality of resource sets may include DL RS from each TRP (e.g., CSI resource set 1 includes only DL RS from TRP 1, and CSI resource set 2 includes only DL RS from TRP 2).

In the same manner, a plurality of CSI-IM-ResourceSets may be configured within CSI resource setting for interference measurement. Multiple resource sets (as many as the number of TRPs) among the plurality of resource sets may be activated or triggered for the single CSI reporting setting. The plurality of resource sets may include DL RS (ZP-CSI RS) from each TRP (e.g., CSI resource set 1 includes only ZP-CSI RS from TRP 1, and CSI resource set 2 includes only ZP-CSI RS from TRP 2).

The CSI resource setting including the plurality of resource sets may be linked/associated to periodic/semi-persistent/aperiodic CSI reporting setting.

As the plurality of resource sets are configured/linked/activated/triggered to the single CSI resource setting, a UE may perform M-TRP specifically the beam measurement and reporting (or CSI reporting). Specifically, the UE may recognize that a specific resource set includes only a resource from a specific TRP. The UE may perform best beam reporting from different TRPs, or perform TRP-specific CSI reporting.

According to the existing method (e.g., Rel-15 based aperiodic CSI reporting), as described above, specific (aperiodic) CSI reporting setting is triggered through a CSI request field of UL grant DCI in triggering of aperiodic CSI reporting/aperiodic CSI-RS. At the same time as this, resource sets based on the following i) to iii) that the UE shall measure for the corresponding reporting may be indicated one by one (by RRC configuration) (i.e., one resource set based on i), one resource set based on ii), and one resource set based on iii)).

i) Resource set within CSI resource setting for channel measurement
ii) Resource set within CSI resource setting for (ZP) interference measurement
iii) Resource set within CSI resource setting for (NZP) interference measurement

However, as in the proposal 1, when two or more resource sets shall be measured for each of channel measurement/interference measurement for the purpose of M-TRP CSI (beam) measurement and reporting, there is a need to trigger aperiodic CSI reporting and at the same time to configure/activate/trigger a plurality of resource sets to be measured for each resource setting. The following proposal 2 describes this in detail.

[Proposal 2]

When a base station triggers aperiodic CSI reporting (for M-TRP CSI (beam) measurement and reporting), a plurality of resource sets within resource setting may be configured/activated/triggered to be measured by a UE. The resource setting may include at least one of i) resource setting for channel measurement (CM), ii) resource setting for zero power-interference measurement (ZP-IM), or iii) resource setting for non-zero power-interference measurement (NZP-IM).

[Proposal 2-1]

In each reporting setting configured/linked to trigger states (up to 63 trigger states) for aperiodic CSI reporting, a base station may configure/link a plurality of resource sets within single resource setting via RRC configuration. Specifically, a plurality of (ZP/NZP-)CSI resource sets (as many as the number of TRPs) may be configured within CSI-AssociatedReportConfigInfo IE representing reporting setting configured/linked to a trigger state (CSI-AperiodicTrigger-State) of Table 11. For example, a plurality of (ZP/NZP-)CSI resource sets may be configured within single resource setting (e.g., the following single resourcesForChannel, csi-IM-ResourcesForInterference, nzp-CSI-RS-ResourcesForInterference) within CSI-AssociatedReportConfigInfo IE.

The plurality of resource sets may be based on different resource sets. The different resource sets may refer to different TRPs. That is, the plurality of resource sets may be related to the different TRPs, respectively. Further, when two or more resource sets are configured, more than one resource set may be optionally configured by the base station. That is, S-TRP based CSI reporting or M-TRP based CSI reporting may be distinguished per trigger state by the optional/additional configuration.

Alternatively, the plurality of resource sets configured/linked within the single resource setting may be based on a paired resource set by pre-configuration of the base station. Specifically, the base station may pre-configure paired resource set(s) (for M-TRP based CSI measurement and reporting). Through this, the base station may indicate the M-TRP based CSI measurement and reporting without enhancing the RRC structure as above.

For example, a resource set (within CSI resource setting) configured to aperiodic CSI reporting trigger state may be a single resource set. Even in this case, when the single resource set belongs to the specific pre-configured paired resource set, the UE may consider the measurement and reporting for the plurality of resource sets (i.e., paired resource set) to be triggered and perform aperiodic CSI reporting.

Table 11 below shows an example of an information element of CSI-AperiodicTriggerStateList described above.

【Table 11】

| *CSI-AperiodicTriggerStateList* information element |
|---|
| -- ASN1START |
| -- TAG-CSI-APERIODICTRIGGERSTATELIST-START |
| |
| CSI-AperiodicTriggerStateList ::=    SEQUENCE (SIZE (1..maxNrOfCSI-AperiodicTriggers)) OF CSI-AperiodicTriggerState |
| |
| CSI-AperiodicTriggerState ::=        SEQUENCE { |
|     associatedReportConfigInfoList       SEQUENCE (SIZE(1..maxNrofReportConfigPerAperiodicTrigger)) OF CSI-AssociatedReportConfigInfo, |
|     ... |
| } |
| |
| CSI-AssociatedReportConfigInfo ::=  SEQUENCE { |
|     reportConfigId                     CSI-ReportConfigId, |
|     resourcesForChannel                CHOICE { |
|         nzp-CSI-RS                         SEQUENCE { |
|             resourceSet                        INTEGER (1..maxNrofNZP-CSI-RS-ResourceSetsPerConfig), |
|             qcl-info                           SEQUENCE (SIZE(1..maxNrofAP-CSI-RS-ResourcesPerSet)) OF TCI-StateId |
| |
| OPTIONAL   -- Cond Aperiodic |
|         }, |
|         csi-SSB-ResourceSet                INTEGER (1..maxNrofCSI-SSB-ResourceSetsPerConfig) |
|     }, |
|     csi-IM-ResourcesForInterference    INTEGER(1..maxNrofCSI-IM-ResourceSetsPerConfig) |
| |
| OPTIONAL, -- Cond CSI-IM-ForInterference |
|     nzp-CSI-RS-ResourcesForInterference INTEGER (1..maxNrofNZP-CSI-RS-ResourceSetsPerConfig) |
| |
| OPTIONAL, -- Cond NZP-CSI-RS-ForInterference |

```
    ...
}

-- TAG-CSI-APERIODICTRIGGERSTATELIST-STOP
-- ASN1STOP
```

In the resource setting, QCL-info as many as the plurality of CSI resource sets (or/and as many as the number of CSI resources) may also be configured. That is, a plurality of QCL-infos related to the plurality of CSI resource sets may be configured.

Based on the operation of the proposal 2-1, if the base station triggers the aperiodic CSI reporting setting, the UE may distinguish the TRPs based on the plurality of resource sets (in each resource setting of CM/ZP-IM/NZP-IM purpose). The UE may report a best beam from each TRP or perform TRP-specific CSI reporting.

[Proposal 2-2]

In each reporting setting configured/linked to trigger states (up to 63 trigger states) for aperiodic CSI reporting, a base station may activate a plurality of resource sets via an MAC CE message. For example, a plurality of resource sets within single resource setting may be activated by the MAC CE message.

Specifically, a plurality of (ZP/NZP-)CSI resource sets (as many as the number of TRPs) may be activated/updated by MAC signaling to be configured/activated within CSI-AssociatedReportConfigInfo IE representing reporting setting configured/linked to a trigger state of Table 11.

For example, a plurality of (ZP/NZP-)CSI resource sets within single resource setting (e.g., the following single resourcesForChannel, csi-IM-ResourcesForInterference, nzp-CSI-RS-ResourcesForInterference) within CSI-AssociatedReportConfigInfo IE may be activated/updated by MAC signaling to be configured/activated.

The MAC signaling or/and the MAC CE message may be MAC signaling/MAC message based on enhancement of the existing Aperiodic CSI Trigger State Subselection MAC CE (e.g., FIG. 11).

For example, MAC CE of FIG. 11 may be enhanced as follows. Octet(s) containing information on resource set(s) activated within the corresponding trigger state(s) after octet(s) sub-selecting CSI trigger state(s) may be added to the MAC CE. For example, the base station may transmit, to the UE, information on resource set(s) activated within each target trigger state through a new MAC CE format.

In the resource setting, QCL-info as many as the plurality of (activated) CSI resource sets (or/and as many as the number of CSI resources) may also be activated/updated. That is, a plurality of QCL-infos related to the plurality of CSI resource sets may be activated/updated.

The plurality of resource sets may be based on different resource sets. The different resource sets may refer to different TRPs. That is, the plurality of resource sets may be related to the different TRPs, respectively. The UE may distinguish the TRPs through the activation/update. Specifically, the UE may distinguish the TRPs based on the plurality of resource sets (in each resource setting of CM/ZP-IM/NZP-IM purpose). The UE may report a best beam from each TRP or perform TRP-specific CSI reporting.

[Proposal 2-3]

In relation to aperiodic CSI reporting, a base station may indicate whether a UE performs S-TRP reporting or M-TRP reporting, through a field of UL grant DCI.

In each reporting setting configured/linked to trigger states (up to 63 trigger states) for the aperiodic CSI reporting, the base station may indicate whether measurement and reporting operation of the UE is for one resource set or a plurality of resource sets, through a specific field within the UL grant DCI.

For example, the base station may indicate whether the UE performs measurement and reporting for a specific resource set or measurement and reporting for a plurality of specific resource sets among a plurality of resource sets within single resource setting, through a specific field within the UL grant DCI.

Based on the specific field within the UL grant DCI, the UE may perform measurement and reporting operation for i) a specific resource set or ii) a plurality of specific resource sets, among a plurality of resource sets within reporting setting.

For example, as in the proposal 2-1/proposal 2-2, in single reporting setting of each trigger state, a plurality of resource sets (within single resource setting) may be configured/activated. DCI carrying the corresponding CSI request may include information that indicates to measure and report specific resource set(s) (e.g., a specific resource set or a plurality of specific resource sets) among the plurality of resource sets.

The information may be jointly encoded to each codepoint (each trigger state) of a CSI request field.

Alternatively, the information may be indicated by fields other than the CSI request field. Specifically, the base station may indicate the UE to measure and report specific resource set(s) (within single resource setting) of a trigger state indicated in a CSI request field through a separate field other than a CSI request field of the UL grant DCI.

The measurement for the specific resource set(s) may be performed as follows.

As in the proposal 2-1 and the proposal 2-2, the UE may perform the measurement based on QCL-info information configured/activated for a plurality of resource sets.

Alternatively, in order to indicate QCL-info information for resources within a resource set, to which the measurement is indicated, among the plurality of resource sets configured/activated for the aperiodic CSI reporting, an UL-TCI state field or a DL/UL unified TCI state field may be utilized/applied. Specifically, the TCI state field may include TCI state (ID) information as many as the number of resources for the measurement of the aperiodic CSI reporting.

Based on information according to the above-described embodiment, it may be determined whether the UE performs S-TRP reporting or M-TRP reporting when the UE performs the aperiodic CSI reporting.

Both the operations of the proposal 1 and the proposal 2 can be utilized/applied when group-based beam reporting is enable/disable.

In the examples described above, each of a plurality of resource sets configured/linked/activated/triggered to the single CSI resource setting may correspond to one TRP. For example, the plurality of resource sets and a plurality of TRPs may have a one-to-one correspondence relationship.

Alternatively, each of the plurality of resource sets may correspond to one or more TRPs. That is, any TRPs may correspond to the same one resource set. For example, the plurality of resource sets and the plurality of TRPs may have a one-to-many correspondence relationship. A plurality of TRPs corresponding to one resource set may have a QCL relationship. That is, a QCL relationship may be assumed between one TRP and another TRP among the plurality of TRPs.

The correspondence relationship may be separately configured or may be defined based on a predetermined criterion (e.g., list order).

A method for a UE to report CSI for one or more of a plurality of TRPs in a wireless communication system according to the present disclosure may comprise receiving CSI resource setting from a base station via higher layer (e.g., RRC) signaling, receiving, from the base station, information indicating one or more specific CSI resource sets to be measured by the UE among a plurality of CSI resource sets, and performing aperiodic CSI reporting (e.g., via PUSCH).

The UE may receive, from the base station, single CSI resource setting configured/linked/associated to single CSI reporting setting information via higher layer (e.g., RRC) signaling. The CSI resource setting information may include a plurality of CSI resource sets for DL CSI measurement. The plurality of CSI resource sets may have a one-to-one correspondence relationship or a one-to-many correspondence relationship with the plurality of TRPs.

Information indicating the one or more specific CSI resource sets may be received through combinations of one or two or more of higher layer (e.g., RRC) signaling, L2 (e.g., MAC CE) signaling, or L1 (e.g., DCI) signaling.

A method for a base station to receive CSI reporting for one or more of a plurality of TRPs from a UE in a wireless communication system according to the present disclosure may comprise transmitting CSI resource setting to the UE via higher layer (e.g., RRC) signaling, transmitting, to the UE, information indicating one or more specific CSI resource sets to be measured by the UE among a plurality of CSI resource sets, and receiving aperiodic CSI reporting (e.g., via PUSCH) from the UE.

The base station may transmit, to the UE, single CSI resource setting configured/linked/associated to single CSI reporting setting information via higher layer (e.g., RRC) signaling. The CSI resource setting information may include a plurality of CSI resource sets for DL CSI measurement. The plurality of CSI resource sets may have a one-to-one correspondence relationship or a one-to-many correspondence relationship with the plurality of TRPs.

Information indicating the one or more specific CSI resource sets may be transmitted through combinations of one or two or more of higher layer (e.g., RRC) signaling, L2 (e.g., MAC CE) signaling, or L1 (e.g., DCI) signaling.

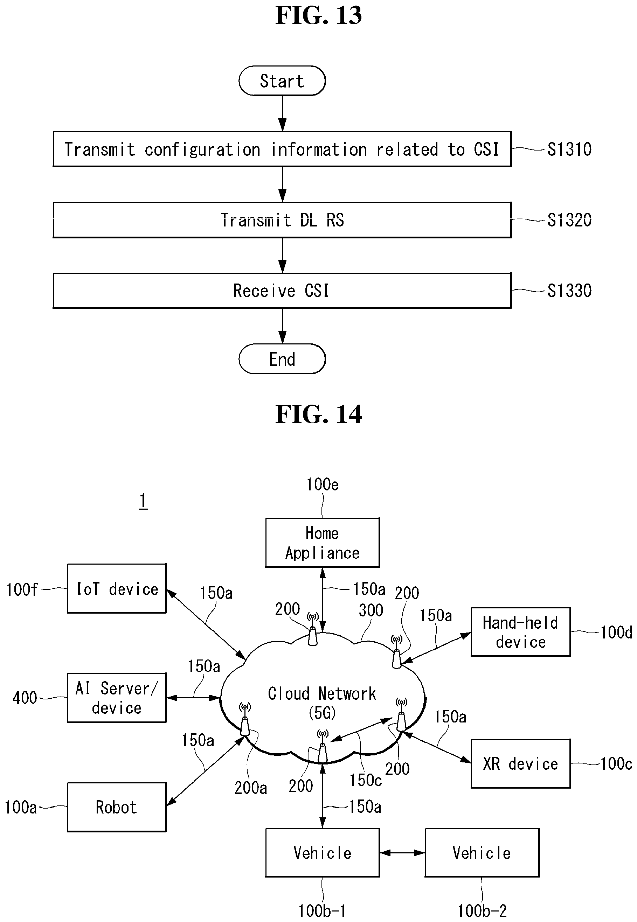

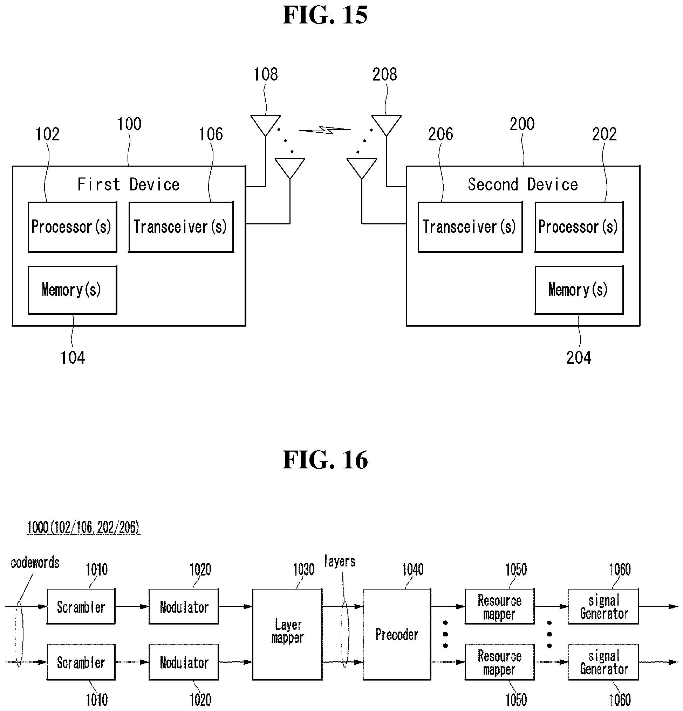

From an implementation perspective, the UE/BS operations according to the above-described embodiments (e.g., operations related to the CSI reporting based on at least one of the proposal 1, the proposal 2-1, the proposal 2-2, and the proposal 2-3) may be processed by a device of FIGS. 14 to 18 to be described later (e.g., processors 102 and 202 of FIG. 15).

In addition, the UE/BS operations according to the above-described embodiments (e.g., operations related to the CSI reporting based on at least one of the proposal 1, the proposal 2-1, the proposal 2-2, and the proposal 2-3) may be stored in a memory (e.g., 104 and 204 of FIG. 15) in the form of a command/program (e.g., instruction, executable code) for running at least one processor (e.g., 102 and 202 of FIG. 15).

Embodiments to be described below from UE/BS operation perspective are described in detail with reference to FIGS. 12 and 13. Methods to be described below are distinguished merely for convenience of description. Therefore, it is obvious that partial configuration of any one method can be replaced by partial configuration of another method, or methods can be combined and applied.

FIG. 12 is a flowchart illustrating a method for a UE to report channel state information in a wireless communication system according to an embodiment of the present disclosure.

Referring to FIG. 12, a method for a UE to report channel state information (CSI) in a wireless communication system according to an embodiment of the present disclosure comprises a step S1210 of receiving configuration information related to the CSI, a step S1220 of receiving a DL RS, a step S1230 of calculating the CSI, and a step S1240 of reporting the CSI.

In the step S1210, the UE receives, from a base station (BS), the configuration information related to the CSI. The configuration information related to the CSI may be based on the configuration information related to the CSI of FIG. 10 (S 1010).

According to the step S1210, an operation of the UE (100/200 of FIGS. 14 to 18) to receive the configuration information related to the CSI from the base station (100/200 of FIGS. 14 to 18) may be implemented by a device of FIGS. 14 to 18. For example, referring to FIG. 15, one or more processors 102 may control one or more transceivers 106 and/or one or more memories 104 so as to receive the configuration information related to the CSI from the base station 200.

In the step S1220, the UE receives downlink reference signal (DL RS) from the base station.

According to an embodiment, the DL RS may be based on at least one of channel state information-reference signal (CSI-RS) or a synchronization signal block (SSB).

According to the step S1220, an operation of the UE (100/200 of FIGS. 14 to 18) to receive the DL RS from the base station (100/200 of FIGS. 14 to 18) may be implemented by the device of FIGS. 14 to 18. For example, referring to FIG. 15, one or more processors 102 may control one or more transceivers 106 and/or one or more memories 104 so as to receive the DL RS from the base station 200.

In the step S1230, the UE calculates the CSI based on the DL RS. The calculation of the CSI may be performed based on the above-described operation of FIG. 10 (S 1022).

According to the step S1230, an operation of the UE (100/200 of FIGS. 14 to 18) to calculate the CSI based on the DL RS may be implemented by the device of FIGS. 14 to 18. For example, referring to FIG. 15, one or more processors 102 may control one or more transceivers 106 and/or one or more memories 104 so as to calculate the CSI based on the DL RS.

In the step S 1240, the UE reports the CSI to the base station.

According to an embodiment, the reporting of the CSI may be triggered by downlink control information (DCI). That is, the reporting of the CSI may be based on aperiodic CSI reporting. The reporting of the CSI may be triggered by a CSI request field of the DCI.

According to an embodiment, the reporting of the CSI may be related to a specific CSI trigger state among CSI trigger states. The CSI trigger states may be based on CSI-AperiodicTriggerState configured based on CSI-AperiodicTriggerStateList described above.

According to an embodiment, the specific CSI trigger state may include reporting configuration associated with the CSI. The reporting configuration associated with the CSI may be based on the above-described higher layer parameter CSI-AssociatedReportConfigInfo.

The reporting configuration associated with the CSI may include information for a resource set related to the measurement of the DL RS. For example, the information for the resource set related to the measurement of the DL RS may be based on (one or more) resourceSet configured to the above-described higher layer parameter nzp-CSI-RS. For example, the information for the resource set related to the measurement of the DL RS may be based on (one or more) higher layer parameter csi-SSB-ResourceSet. For example, the information for the resource set related to the measurement of the DL RS may be based on higher layer parameter (one or more) csi-SSB-ResourceSet.

The information for the resource set related to the measurement of the DL RS may represent one or more resource sets. For example, the information for the resource set related to the measurement of the DL RS may represent one or more NZP CSI-RS resource sets. For example, the information for the resource set related to the measurement of the DL RS may represent one or more CSI-SSB-resource sets.

According to an embodiment, based on the DCI, the resource set related to the measurement of the DL RS may be determined as one specific resource set or a plurality of specific resource sets. The present embodiment may be based on the proposal 2-3.

The DCI may include information for determining the resource set related to the measurement of the DL RS.

For example, the information for determining the resource set related to the measurement of the DL RS may be jointly encoded to a codepoint of a CSI request field of the DCI.

For example, the information for determining the resource set related to the measurement of the DL RS may be indicated based on a specific field of the DCI, and the specific field may be based on a different field from the CSI request field of the DCI.

It may be determined based on the DCI whether the CSI is related to an S-TRP or an M-TRP. The one specific resource set may be related to one transmission and reception point (TRP), and each of the plurality of specific resource sets may be related to one of a plurality of TRPs.

According to an embodiment, the measurement of the DL RS may be performed based on specific spatial relation information. The present embodiment may be based on the proposal 2-3.

Based on the resource set related to the measurement of the DL RS being determined as the one specific resource set, the specific spatial relation information may be based on a parameter related to QCL information.

Based on the resource set related to the measurement of the DL RS being determined as the plurality of specific resource sets, the specific spatial relation information may be based on a plurality of parameters related to QCL information.

The plurality of parameters related to the QCL information may be based on IDs of a plurality of TCI states. Each of the IDs of the plurality of TCI states may be related to one of a plurality of transmission and reception points (TRPs).

According to the step S1240, an operation of the UE (100/200 of FIGS. 14 to 18) to report the CSI to the base station (100/200 of FIGS. 14 to 18) may be implemented by the device of FIGS. 14 to 18. For example, referring to FIG. 15, one or more processors 102 may control one or more transceivers 106 and/or one or more memories 104 so as to report the CSI to the base station 200.

FIG. 13 is a flowchart illustrating a method for a base station to receive channel state information in a wireless communication system according to another embodiment of the present disclosure.

Referring to FIG. 13, a method for a base station to receive channel state information (CSI) in a wireless communication system according to another embodiment of the present disclosure comprises a step S 1310 of transmitting configuration information related to the CSI, a step S 1320 of transmitting a DL RS, and a step S1330 of receiving the CSI.

In the step S1310, the base station transmits, to a UE, the configuration information related to the CSI. The configuration information related to the CSI may be based on the configuration information related to the CSI of FIG. 10 (S1010).

According to the step S1310, an operation of the base station (100/200 of FIGS. 14 to 18) to transmit the configuration information related to the CSI to the UE (100/200 of FIGS. 14 to 18) may be implemented by a device of FIGS. 14 to 18. For example, referring to FIG. 15, one or more processors 202 may control one or more transceivers 206 and/or one or more memories 204 so as to transmit the configuration information related to the CSI to the UE 100.

In the step S1320, the base station transmits downlink reference signal (DL RS) to the UE.

According to an embodiment, the DL RS may be based on at least one of channel state information-reference signal (CSI-RS) or a synchronization signal block (SSB).

According to the step S1320, an operation of the base station (100/200 of FIGS. 14 to 18) to transmit the DL RS to the UE (100/200 of FIGS. 14 to 18) may be implemented by the device of FIGS. 14 to 18. For example, referring to FIG. 15, one or more processors 202 may control one or more transceivers 206 and/or one or more memories 204 so as to transmit the DL RS to the UE 100.

In the step S1330, the base station receives the CSI from the UE.

Specifically, the UE calculates the CSI based on the DL RS. The base station receives the CSI calculated by the UE. The calculation of the CSI may be performed based on the above-described operation of FIG. 10 (S 1022).

According to an embodiment, the reporting of the CSI may be triggered by downlink control information (DCI). That is, the reporting of the CSI may be based on aperiodic CSI reporting. The reporting of the CSI may be triggered by a CSI request field of the DCI.

According to an embodiment, the reporting of the CSI may be related to a specific CSI trigger state among CSI trigger states. The CSI trigger states may be based on CSI-AperiodicTriggerState configured based on CSI-Aperiodic-TriggerStateList described above.

According to an embodiment, the specific CSI trigger state may include reporting configuration associated with the CSI. The reporting configuration associated with the CSI may be based on the above-described higher layer parameter CSI-AssociatedReportConfigInfo.

The reporting configuration associated with the CSI may include information for a resource set related to the measurement of the DL RS. For example, the information for the resource set related to the measurement of the DL RS may be based on (one or more) resourceSet configured to the above-described higher layer parameter nzp-CSI-RS. For example, the information for the resource set related to the measurement of the DL RS may be based on higher layer parameter (one or more) csi-SSB-ResourceSet. For example, the information for the resource set related to the measurement of the DL RS may be based on (one or more) higher layer parameter csi-SSB-ResourceSet.

The information for the resource set related to the measurement of the DL RS may represent one or more resource sets. For example, the information for the resource set related to the measurement of the DL RS may represent one or more NZP CSI-RS resource sets. For example, the information for the resource set related to the measurement of the DL RS may represent one or more CSI-SSB-resource sets.

According to an embodiment, based on the DCI, the resource set related to the measurement of the DL RS may be determined as one specific resource set or a plurality of specific resource sets. The present embodiment may be based on the proposal 2-3.

The DCI may include information for determining the resource set related to the measurement of the DL RS.

For example, the information for determining the resource set related to the measurement of the DL RS may be jointly encoded to a codepoint of a CSI request field of the DCI.

For example, the information for determining the resource set related to the measurement of the DL RS may be indicated based on a specific field of the DCI, and the specific field may be based on a different field from the CSI request field of the DCI.

It may be determined based on the DCI whether the CSI is related to an S-TRP or an M-TRP. The one specific resource set may be related to one transmission and reception point (TRP), and each of the plurality of specific resource sets may be related to one of a plurality of TRPs.

According to an embodiment, the measurement of the DL RS may be performed based on specific spatial relation information. The present embodiment may be based on the proposal 2-3.

Based on the resource set related to the measurement of the DL RS being determined as the one specific resource set, the specific spatial relation information may be based on a parameter related to QCL information.

Based on the resource set related to the measurement of the DL RS being determined as the plurality of specific resource sets, the specific spatial relation information may be based on a plurality of parameters related to QCL information.

The plurality of parameters related to the QCL information may be based on IDs of a plurality of TCI states. Each of the IDs of the plurality of TCI states may be related to one of a plurality of transmission and reception points (TRPs).

According to the step S1330, an operation of the base station (100/200 of FIGS. 14 to 18) to receive the CSI from the UE (100/200 of FIGS. 14 to 18) may be implemented by the device of FIGS. 14 to 18. For example, referring to FIG. 15, one or more processors 202 may control one or more transceivers 206 and/or one or more memories 204 so as to receive the CSI from the UE 100.

### Example of communication system applied to present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 14 illustrates a communication system 1 applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Example of wireless device applied to the present disclosure.**

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Example of signal processing circuit applied to the present disclosure**

FIG. 16 illustrates a signal process circuit for a transmission signal.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

## Example of application of wireless device applied to the present disclosure

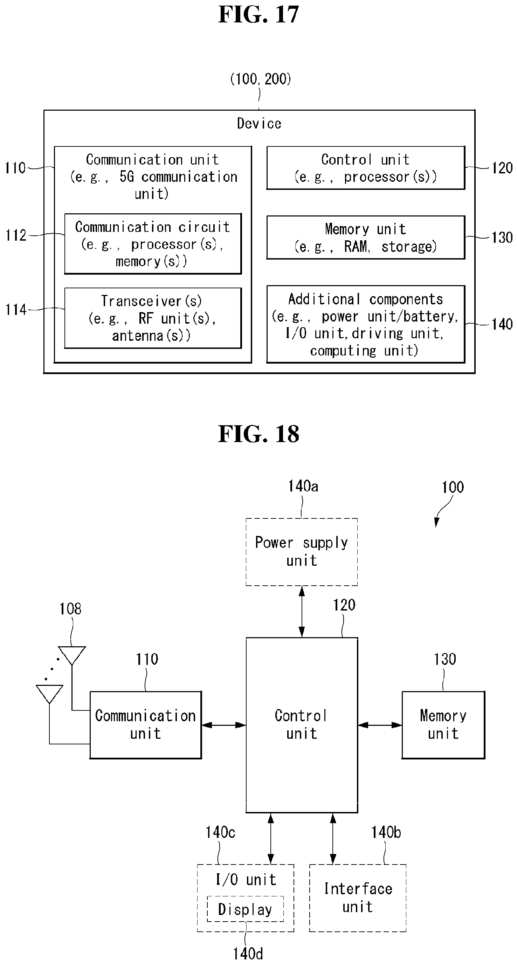

FIG. 17 illustrates another example of a wireless device applied to the present disclosure.

The wireless device may be implemented in various forms according to a use-case/service (refer to FIG. 14). Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Example of hand-held device applied to the present disclosure**

FIG. 18 illustrates a hand-held device applied to the present disclosure.

The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Claims**

1.   A method of a user equipment for reporting channel state information (CSI) in a wireless communication system, the method comprising:

  receiving configuration information related to the channel state information (CSI);
  receiving downlink reference signal (DL RS);
  calculating the CSI based on the DL RS; and
  reporting the CSI,
  wherein the reporting of the CSI is triggered by downlink control information (DCI),
  wherein the reporting of the CSI is related to a specific CSI trigger state among CSI trigger states,
  wherein the specific CSI trigger state includes a reporting configuration associated with the CSI,
  wherein the reporting configuration associated with the CSI includes information for a resource set related to a measurement of the DL RS,
  wherein the information for the resource set related to the measurement of the DL RS represents one or more resource sets, and
  wherein based on the DCI, the resource set related to the measurement of the DL RS is determined as one specific resource set or a plurality of specific resource sets.

2.   The method of claim 1, wherein the reporting of the CSI is triggered by a CSI request field of the DCI.

3.   The method of claim 1, wherein the DCI includes information for determining the resource set related to the measurement of the DL RS.

4.   The method of claim 3, wherein the information for determining the resource set related to the measurement of the DL RS is jointly encoded to a codepoint of a CSI request field of the DCI.

5.   The method of claim 3, wherein the information for determining the resource set related to the measurement of the DL RS is indicated based on a specific field of the DCI, and
wherein the specific field is based on a field different from a CSI request field of the DCI.

6.   The method of claim 1, wherein the DL RS is based on at least one of channel state information-reference signal (CSI-RS) or a synchronization signal block (SSB).

7.   The method of claim 1, wherein the one specific resource set is related to one transmission and reception point (TRP), and
wherein each of the plurality of specific resource sets is related to one of a plurality of TRPs.

8.   The method of claim 1, wherein the measurement of the DL RS is performed based on specific spatial relation information.

9.   The method of claim 8, wherein based on the resource set related to the measurement of the DL RS being determined as the one specific resource set, the specific spatial relation information is based on a parameter related to QCL information, and
wherein based on the resource set related to the measurement of the DL RS being determined as the plurality of specific resource sets, the specific spatial relation information is based on a plurality of parameters related to the QCL information.

10.   The method of claim 9, wherein the plurality of parameters related to the QCL information are based on IDs of a plurality of TCI states, and

wherein each of the IDs of the plurality of TCI states is related to one of a plurality of transmission and reception points (TRPs).

11. A user equipment reporting channel state information (CSI) in a wireless communication system, the user equipment comprising:

one or more transceivers;
one or more processors; and
one or more memories operably connectable to the one or more processors,
wherein the one or more memories are configured to store instructions that allow the one or more processors to perform operations based on being executed by the one or more processors,
wherein the operations comprise:

receiving configuration information related to the channel state information (CSI);
receiving downlink reference signal (DL RS);
calculating the CSI based on the DL RS; and
reporting the CSI,
wherein the reporting of the CSI is triggered by downlink control information (DCI),
wherein the reporting of the CSI is related to a specific CSI trigger state among CSI trigger states,
wherein the specific CSI trigger state includes a reporting configuration associated with the CSI,
wherein the reporting configuration associated with the CSI includes information for a resource set related to a measurement of the DL RS,
wherein the information for the resource set related to the measurement of the DL RS represents one or more resource sets, and
wherein based on the DCI, the resource set related to the measurement of the DL RS is determined as one specific resource set or a plurality of specific resource sets.

12. A device comprising:

one or more memories; and
one or more processors functionally connected to the one or more memories,
wherein the one or more memories include instructions that are configured to allow the one or more processors to perform operations based on being executed by the one or more processors,
wherein the operations comprise:

receiving configuration information related to channel state information (CSI);
receiving downlink reference signal (DL RS);
calculating the CSI based on the DL RS; and
reporting the CSI,
wherein the reporting of the CSI is triggered by downlink control information (DCI),
wherein the reporting of the CSI is related to a specific CSI trigger state among CSI trigger states,
wherein the specific CSI trigger state includes a reporting configuration associated with the CSI,
wherein the reporting configuration associated with the CSI includes information for a resource set related to a measurement of the DL RS,
wherein the information for the resource set related to the measurement of the DL RS represents one or more resource sets, and
wherein based on the DCI, the resource set related to the measurement of the DL RS is determined as one specific resource set or a plurality of specific resource sets.

13. One or more non-transitory computer readable mediums storing one or more instructions,

wherein the one or more instructions executable by one or more processors are configured to allow the one or more processors to perform operations,
wherein the operations comprise:

receiving configuration information related to channel state information (CSI);
receiving downlink reference signal (DL RS);
calculating the CSI based on the DL RS; and

reporting the CSI,

wherein the reporting of the CSI is triggered by downlink control information (DCI),

wherein the reporting of the CSI is related to a specific CSI trigger state among CSI trigger states,

wherein the specific CSI trigger state includes a reporting configuration associated with the CSI,

wherein the reporting configuration associated with the CSI includes information for a resource set related to a measurement of the DL RS,

wherein the information for the resource set related to the measurement of the DL RS represents one or more resource sets, and

wherein based on the DCI, the resource set related to the measurement of the DL RS is determined as one specific resource set or a plurality of specific resource sets.

14. A method of a base station for receiving channel state information (CSI) in a wireless communication system, the method comprising:

transmitting configuration information related to the channel state information (CSI);

transmitting downlink reference signal (DL RS); and

receiving the CSI,

wherein a reporting of the CSI is triggered by downlink control information (DCI),

wherein the reporting of the CSI is related to a specific CSI trigger state among CSI trigger states,

wherein the specific CSI trigger state includes a reporting configuration associated with the CSI,

wherein the reporting configuration associated with the CSI includes information for a resource set related to a measurement of the DL RS,

wherein the information for the resource set related to the measurement of the DL RS represents one or more resource sets, and

wherein based on the DCI, the resource set related to the measurement of the DL RS is determined as one specific resource set or a plurality of specific resource sets.

15. A base station receiving channel state information (CSI) in a wireless communication system, the base station comprising:

one or more transceivers;

one or more processors; and

one or more memories operably connectable to the one or more processors,

wherein the one or more memories are configured to store instructions that allow the one or more processors to perform operations based on being executed by the one or more processors,

wherein the operations comprise:

transmitting configuration information related to the channel state information (CSI);

transmitting downlink reference signal (DL RS); and

receiving the CSI,

wherein a reporting of the CSI is triggered by downlink control information (DCI),

wherein the reporting of the CSI is related to a specific CSI trigger state among CSI trigger states,

wherein the specific CSI trigger state includes a reporting configuration associated with the CSI,

wherein the reporting configuration associated with the CSI includes information for a resource set related to a measurement of the DL RS,

wherein the information for the resource set related to the measurement of the DL RS represents one or more resource sets, and

wherein based on the DCI, the resource set related to the measurement of the DL RS is determined as one specific resource set or a plurality of specific resource sets.

# FIG. 1

# FIG. 2

# FIG. 3

Radio Frame 10ms

Subframe 1ms

| 0 | 1 | 2 | 3 | 4 | 5 | 6 | 7 | 8 | 9 |

Fixed Size

Subframe = {1, 2, 4} Slots

Slot

| 0 | 1 | 2 | 3 |

Slot = {7, 14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot = {2, 4, 7} Symbols - ffs

# FIG. 4

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
- $(k, \bar{l})$ in resource grid
- $(k, l)$ in resource block

$k = 0$

$l = 0$      $l = 14 \cdot 2^{\mu} - 1$

# FIG. 5

Antenna port A ⎱ Numerology X
Antenna port B ⎰

Antenna port A ⎱ Numerology Y
Antenna port B ⎰

# FIG. 6

INITIAL CELL SEARCH — SYSTEM INFORMATION RECEPTION — RANDOM ACCESS PROCEDURE — GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S601 — S602 — S603 — S604 — S605 — S606 — S607 — S608

· DL/UL ACK/NACK
· UE CQI/PMI RI REPORT USING PUSCH AND PUCCH

## FIG. 7

## FIG. 8

(a)                                                    (b)

# FIG. 9

UE                                                                                    BS

SRS Config. IE
(usage=BM, SRS-SpatialRelation Info)                          S910

S920

Determine Tx beam
for SRS resource

S930

Transmit SRS through determined Tx beam

S940

feedback

# FIG. 10

UE                                                                                    BS

S1010

CSI related configuration information

S1021

Receive CSI-RS

S1022

S1020

Calculate CSI

S1030

Report CSI

# FIG. 11

| R | Serving Cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |
| $T_{(N-2) \times 8+7}$ | $T_{(N-2) \times 8+6}$ | $T_{(N-2) \times 8+5}$ | $T_{(N-2) \times 8+4}$ | $T_{(N-2) \times 8+3}$ | $T_{(N-2) \times 8+2}$ | $T_{(N-2) \times 8+1}$ | $T_{(N-2) \times 8}$ | Oct N |

# FIG. 12

Start

Receive configuration information related to CSI — S1210

Receive DL RS — S1220

Calculate CSI — S1230

Report CSI — S1240

End

# FIG. 13

```
                    Start

   Transmit configuration information related to CSI  ——S1310

                  Transmit DL RS                       ——S1320

                   Receive CSI                         ——S1330

                     End
```

# FIG. 14

# FIG. 15

# FIG. 16

# FIG. 17

(100, 200)

Device

110 — Communication unit
(e.g., 5G communication unit)

112 — Communication circuit
(e.g., processor(s), memory(s))

114 — Transceiver(s)
(e.g., RF unit(s), antenna(s))

Control unit
(e.g., processor(s)) — 120

Memory unit
(e.g., RAM, storage) — 130

Additional components
(e.g., power unit/battery, I/O unit, driving unit, computing unit) — 140

# FIG. 18

140a

Power supply unit

100

108

110

Communication unit

120

Control unit

130

Memory unit

140c

I/O unit

Display

140d

140b

Interface unit

## INTERNATIONAL SEARCH REPORT

| International application No. |
|---|
| **PCT/KR2021/015340** |

| A. | CLASSIFICATION OF SUBJECT MATTER |
|---|---|

**H04B 7/06**(2006.01)i; **H04B 7/0413**(2017.01)i; **H04B 17/345**(2014.01)i; **H04L 5/00**(2006.01)i; **H04J 11/00**(2006.01)i; **H04W 48/10**(2009.01)i

According to International Patent Classification (IPC) or to both national classification and IPC

| B. | FIELDS SEARCHED |
|---|---|

Minimum documentation searched (classification system followed by classification symbols)

H04B 7/06(2006.01); H04L 5/00(2006.01); H04W 24/10(2009.01); H04W 76/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(Channel State Information, CSI), 설정 정보(configuration information), 하향링크 참조 신호(Downlink Reference Signal, DL RS), 보고(report), 트리거(trigger), 자원 세트(resource set)

| C. | DOCUMENTS CONSIDERED TO BE RELEVANT |
|---|---|

| Category* | Citation of document, with indication, where appropriate, of the relevant passages | Relevant to claim No. |
|---|---|---|
| DX | 3GPP; TSG RAN; NR; Physical layer procedures for data (Release 16). 3GPP TS 38.214 V16.3.0. 02 October 2020.<br>See sections 5.1.4.2 and 5.2-5.2.1.5.1a; and table 5.2.1.4-1. | 1-15 |
| A | WO 2017-222353 A1 (LG ELECTRONICS INC.) 28 December 2017 (2017-12-28)<br>See paragraphs [0142]-[0146]; and figure 9. | 1-15 |
| A | KR 10-2014-0119055 A (SAMSUNG ELECTRONICS CO., LTD.) 08 October 2014 (2014-10-08)<br>See paragraphs [0038]-[0043]; and figure 5. | 1-15 |
| A | WO 2015-160198 A1 (LG ELECTRONICS INC.) 22 October 2015 (2015-10-22)<br>See paragraph [0063]; and figure 7. | 1-15 |
| DA | 3GPP; TSG RAN; NR; Radio Resource Control (RRC) protocol specification (Release 16). 3GPP TS 38.3 31 V16.2.0. 07 October 2020.<br>See section 5. | 1-15 |

☐ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **09 February 2022** | **10 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2021/015340**

| Patent document cited in search report | | | Publication date (day/month/year) | Patent family member(s) | | | Publication date (day/month/year) |
|---|---|---|---|---|---|---|---|
| WO | 2017-222353 | A1 | 28 December 2017 | EP | 3477988 | A1 | 01 May 2019 |
| | | | | EP | 3477988 | A4 | 22 January 2020 |
| | | | | EP | 3477988 | B1 | 28 October 2020 |
| | | | | US | 10637624 | B2 | 28 April 2020 |
| | | | | US | 10694415 | B2 | 23 June 2020 |
| | | | | US | 2019-0124539 | A1 | 25 April 2019 |
| | | | | US | 2019-0190672 | A1 | 20 June 2019 |
| | | | | US | 2020-0266948 | A1 | 20 August 2020 |
| | | | | US | 2020-0314677 | A1 | 01 October 2020 |
| | | | | WO | 2018-030849 | A1 | 15 February 2018 |
| KR | 10-2014-0119055 | A | 08 October 2014 | CN | 104081827 | A | 01 October 2014 |
| | | | | CN | 104081827 | B | 13 April 2018 |
| | | | | EP | 2807867 | A1 | 03 December 2014 |
| | | | | EP | 2807867 | A4 | 16 December 2015 |
| | | | | JP | 2015-510720 | A | 09 April 2015 |
| | | | | JP | 6851709 | B2 | 31 March 2021 |
| | | | | US | 2013-0195045 | A1 | 01 August 2013 |
| | | | | US | 2015-0244443 | A1 | 27 August 2015 |
| | | | | US | 9019856 | B2 | 28 April 2015 |
| | | | | US | 9553648 | B2 | 24 January 2017 |
| | | | | WO | 2013-112024 | A1 | 01 August 2013 |
| WO | 2015-160198 | A1 | 22 October 2015 | CN | 106233772 | A | 14 December 2016 |
| | | | | CN | 106233772 | B | 05 November 2019 |
| | | | | EP | 3132633 | A1 | 22 February 2017 |
| | | | | EP | 3132633 | A4 | 29 November 2017 |
| | | | | EP | 3132633 | B1 | 20 March 2019 |
| | | | | JP | 2017-511665 | A | 20 April 2017 |
| | | | | JP | 6580591 | B2 | 25 September 2019 |
| | | | | KR | 10-2016-0145009 | A | 19 December 2016 |
| | | | | KR | 10-2354498 | B1 | 21 January 2022 |
| | | | | US | 10432289 | B2 | 01 October 2019 |
| | | | | US | 2017-0041059 | A1 | 09 February 2017 |
| | | | | US | 2018-0241455 | A1 | 23 August 2018 |
| | | | | US | 9979455 | B2 | 22 May 2018 |

Form PCT/ISA/210 (patent family annex) (July 2019)